# EUROPEAN PATENT APPLICATION

(11) **EP 4 644 153 A1**
(43) Date of publication of application: **05.11.2025**
(21) Application number: 23912107.2
(22) Date of filing: 26.12.2023
(51) Int. Cl.: B60K 8/00, B60K 1/04, B60K 11/04, B60K 15/063, B60L 50/71, B60L 50/72, H01M 8/04701

(54) **WORK VEHICLE**

(30) Priority: 28.12.2022 JP 2022212150; 28.12.2022 JP 2022212149
(71) Applicant: KUBOTA CORPORATION, Osaka-shi, Osaka 556-8601 (JP)
(72) Inventor: TAKAKI, Takahiro, Sakai-shi, Osaka 590-0908 (JP); TAKAKI, Go, Sakai-shi, Osaka 590-0908 (JP); MINAMIDE, Yuki, Sakai-shi, Osaka 590-0908 (JP); SAKANO, Tomoyoshi, Sakai-shi, Osaka 590-0908 (JP); HAYASHI, Yosuke, Sakai-shi, Osaka 590-0908 (JP); AMITANI, Kodai, Sakai-shi, Osaka 590-0908 (JP); IWAMI, Kenichi, Sakai-shi, Osaka 590-0908 (JP); OHNISHI, Teppei, Sakai-shi, Osaka 590-0908 (JP); MORITA, Atsushi, Sakai-shi, Osaka 590-0908 (JP); KAZAMA, Isamu, Sakai-shi, Osaka 590-0908 (JP); MATSUI, Kenshiro, Sakai-shi, Osaka 590-0908 (JP); ISHIHARA, Kenji, Sakai-shi, Osaka 590-0908 (JP)
(74) Representative: Cabinet Beau de Loménie
(86) International application number: PCT/JP2023/046559
(87) International publication number: WO 2024/143328

(57) **Abstract**

To adjust a temperature of a fuel cell (8) to an appropriate temperature in a working vehicle (1).

The working vehicle (1) includes a vehicle body (2) to which a working device (49) is connectable, a cabin (3) to store an operator's seat (10) provided on the vehicle body (2), a traveling device (4) to support the vehicle body (2) and allow the vehicle body (2) to travel, a drive device (5) to drive the traveling device (4), and a first heat exchanger (80). The drive device (5) includes a fuel cell (8) to generate electric power to drive the drive device (5). The first heat exchanger (80) is operable to supply air cooled by heat exchange with a refrigerant into the cabin (3) and supply heat of the refrigerant heated by the heat exchange to the fuel cell (8).

## Description

### Technical Field

The present invention relates to working vehicles each of which is driven using gas stored in a tank.

### Background Art

As described in Patent Literature 1, a tractor includes a hood on a front portion of a vehicle body. Inside the hood, an engine, a radiator, a fuel tank, a battery, and the like are stored.

On the other hand, for the purpose of realizing decarbonization, fuel cell vehicles (FCVs) that use hydrogen as fuel have been developed. These working vehicles include a tank (hydrogen tank) in which hydrogen gas is stored (accumulated) and a fuel cell that generates electric power by using the hydrogen gas stored in the tank.

### Citation List

### Patent Literature

PTL 1: Japanese Unexamined Patent Application Publication No. 2022-128483

### Summary of Invention

### Technical Problem

A fuel cell provided in a fuel cell vehicle has an optimum reaction temperature for electrode reaction, and is said to be preferably maintained at approximately 70°C. To maintain the temperature of the fuel cell at approximately 70°C, it is necessary to cool or heat the fuel cell.

With the structure of the related art, a tank and a fuel cell cannot be detached.

The present invention was accomplished in view of the above problem, and an object of the present invention is to provide a working vehicle that can adjust a temperature of a fuel cell to an appropriate temperature.

Another object of the present invention is to provide a working vehicle in which a fuel cell and a tank are provided as a unit so as to be easily attachable and detachable.

### Solution to Problem

A working vehicle according to an example embodiment of the present invention includes a vehicle body to which a working device is connectable, a cabin to house an operator's seat provided on the vehicle body, a traveling device to support the vehicle body and allow the vehicle body to travel, a drive device to drive the traveling device, and a first heat exchanger, in which the drive device includes a fuel cell to generate electric power to drive the drive device, and the first heat exchanger is operable to supply air cooled by heat exchange with a refrigerant into the cabin and supply heat of the refrigerant heated by the heat exchange to the fuel cell.

A hood may be provided at a front portion of the vehicle body. The fuel cell may be housed in the hood.

The first heat exchanger may include a first condenser to release heat of the refrigerant and a heat guider to guide the heat released from the first condenser to the fuel cell.

The first heat exchanger may include a first condenser to release heat in the hood, a first evaporator to perform heat absorption in the cabin, a first pipe to allow the refrigerant to circulate between the first condenser and the first evaporator, and a first compressor to compress the refrigerant that has absorbed heat in the first evaporator.

The first heat exchanger may include a first condenser fan to blow heat released from the first condenser to the fuel cell as hot air and an air blowing fan to send air cooled by the heat absorption in the first evaporator into the cabin as cool air.

The working vehicle may further include a plurality of tanks to store gas to drive the drive device. The traveling device may include front wheels provided at left and right sides of a front portion of the vehicle body and rear wheels provided at left and right sides of a rear portion of the vehicle body. The plurality of tanks may be provided between the front wheels and the rear wheels.

The drive device may include a battery to store electric power generated by the fuel cell and a drive motor to be driven by electric power generated by the fuel cell. The drive motor may be provided at a center of the vehicle body in a left-right direction such that the drive motor is located between the front wheels and the rear wheels.

The battery may be provided below the operator's seat in the cabin.

A second heat exchanger to cool the fuel cell may be provided rearward of the fuel cell inside the hood.

The second heat exchanger may include a stack cooler to cool the fuel cell, a second condenser to release heat at a location in the hood forward and/or rearward of the fuel cell, a second condenser fan to discharge the heat released by the second condenser to an outside of the hood, a second pipe to allow a refrigerant to circulate between the second condenser and the stack cooler, and a second compressor to compress the refrigerant that has absorbed heat in the stack cooler.

A working vehicle according to another example embodiment of the present invention includes a vehicle body, a traveling device to support the vehicle body and allow the vehicle body to travel, a drive device to drive the traveling device, and a fuel cell unit including a fuel cell to supply electric power to drive the drive device, and a tank to tore gas used to generate electric power in the fuel cell, wherein the fuel cell unit is attachable to and detachable from the vehicle body.

The vehicle body may include a cabin to house an operator's seat provided on the vehicle body and a hood provided forward of the cabin. The working vehicle may further include an attachment body to support the fuel cell unit in an attachable and detachable manner inside the hood and/or on the cabin.

The fuel cell unit may include an output connector to output electric power generated by the fuel cell to an outside. The attachment body may include a bracket to fix the fuel cell unit and an input connector connected to an electric circuit to supply electric power to the drive device and coupled to the output connector such that electric power generated by the fuel cell is input to the input connector. The output connector and the input connector may be attachable to and detachable from each other.

The attachment body may be provided at an upper portion of the cabin.

The attachment body may be provided inside the hood.

The fuel cell unit may include a casing to house the fuel cell and/or the tank, and the fuel cell and/or the tank may be attached and detached together with the casing.

The fuel cell unit may include a lifting aid to support the fuel cell unit in a suspended manner.

### Advantageous Effects of Invention

With the working vehicle according to the present invention, a temperature of the fuel cell can be adjusted to an appropriate temperature.

Furthermore, according to the working vehicle, the fuel cell and the tank are provided as a unit that can be easily attached and detached.

### Brief Description of Drawings

[FIG. 1] FIG. 1 is a perspective view of a working vehicle according to a first embodiment.
[FIG. 2] FIG. 2 is a perspective view illustrating layout of a fuel cell and a tank in the working vehicle according to the first embodiment.
[FIG. 3] FIG. 3 is an enlarged view of a tank unit according to the first embodiment.
[FIG. 4] FIG. 4 is an exploded view illustrating a structure of the tank unit according to the first embodiment.
[FIG. 5] FIG. 5 is a plan view illustrating a structure of a first heat exchanger according to the first embodiment.
[FIG. 6] FIG. 6 is a side view illustrating the structure of the first heat exchanger according to the first embodiment.
[FIG. 7] FIG. 7 is a block diagram of electrical equipment provided in the working vehicle according to the first embodiment.
[FIG. 8] FIG. 8 is a block diagram of the first heat exchanger provided in the working vehicle according to the first embodiment.
[FIG. 9] FIG. 9 is a block diagram of a second heat exchanger provided in the working vehicle according to the first embodiment. FIG. 9 is an exploded view of a tank unit in which tanks are arranged in a front-rear direction.
[FIG. 10] FIG. 10 illustrates an outline configuration of the first heat exchanger according to the first embodiment.
[FIG. 11] FIG. 11 is a perspective view of a working vehicle according to a second embodiment.
[FIG. 12] FIG. 12 is a side view of the working vehicle according to the second embodiment.
[FIG. 13] FIG. 13 is a plan view of the working vehicle according to the second embodiment.
[FIG. 14] FIG. 14 is a plan view illustrating an internal structure of a fuel cell unit according to the second embodiment.
[FIG. 15] FIG. 15 illustrates a manner in which an attachment body and a lifting aid are arranged with respect to the fuel cell unit according to the second embodiment.
[FIG. 16] FIG. 16 illustrates a procedure of attaching and detaching the fuel cell unit in the working vehicle according to the second embodiment.
[FIG. 17] FIG. 17 is a side view of a working vehicle according to a third embodiment.
[FIG. 18] FIG. 18 is a plan view of the working vehicle according to the third embodiment.
[FIG. 19] FIG. 19 illustrates a procedure of attaching and detaching a fuel cell unit in the working vehicle according to the third embodiment.

### Description of Embodiments

### <First Embodiment>

A preferable embodiment of a working vehicle 1 according to the present invention is described below.

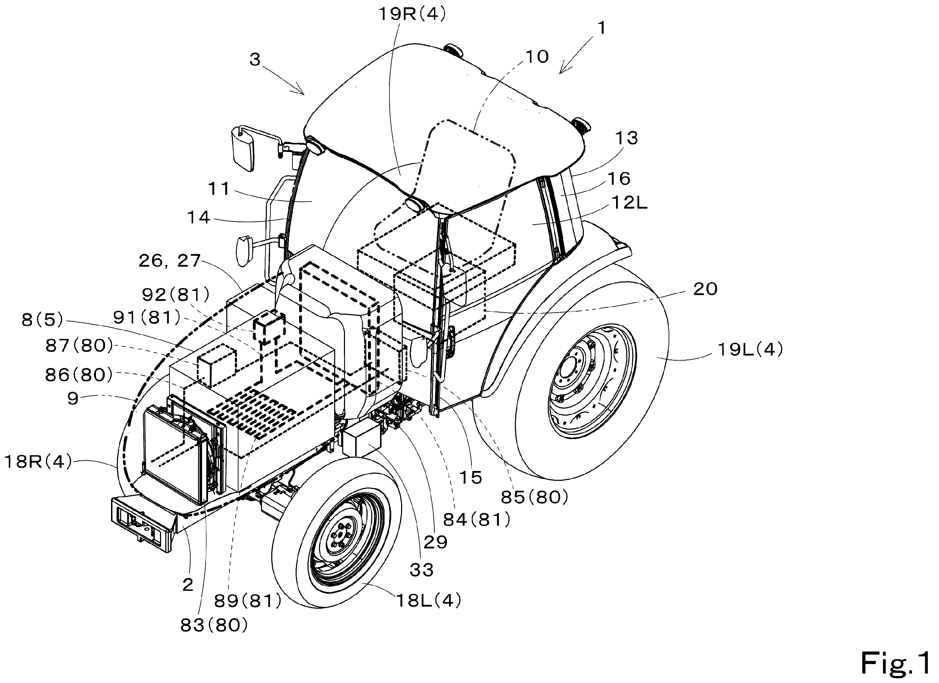

FIG. 1 is a perspective view of a tractor (working vehicle 1) according to the first embodiment. The working vehicle 1 according to the first embodiment is a fuel cell vehicle (FCV) that generates electric power by electrode reaction of hydrogen, which is fuel. The working vehicle 1 includes a tank 7 in which fuel such as hydrogen is stored and a fuel cell 8 that generates electric power by using the fuel such as hydrogen gas stored in the tank 7.

Note that "store" according to the present invention encompasses not only storing liquefied hydrogen gas or the like, but also occlusion onto a metal compound or the like.

Since fuel (e.g., methane) other than hydrogen is sometimes used as fuel for a fuel cell vehicle, the working vehicle 1 according to the present invention also encompasses a fuel cell vehicle that generates electric power by using fuel such as methane. In this case, fuel such as methane is stored in the tank 7, and the fuel cell 8 generates electric power by using fuel such as methane.

In the first embodiment, a tractor is taken as an example of the working vehicle 1. However, the working vehicle 1 according to the present invention is not limited to a tractor and may be, for example, an agricultural machine (e.g., a combine or a rice planter) other than a tractor, a construction machine, a utility vehicle, or the like.

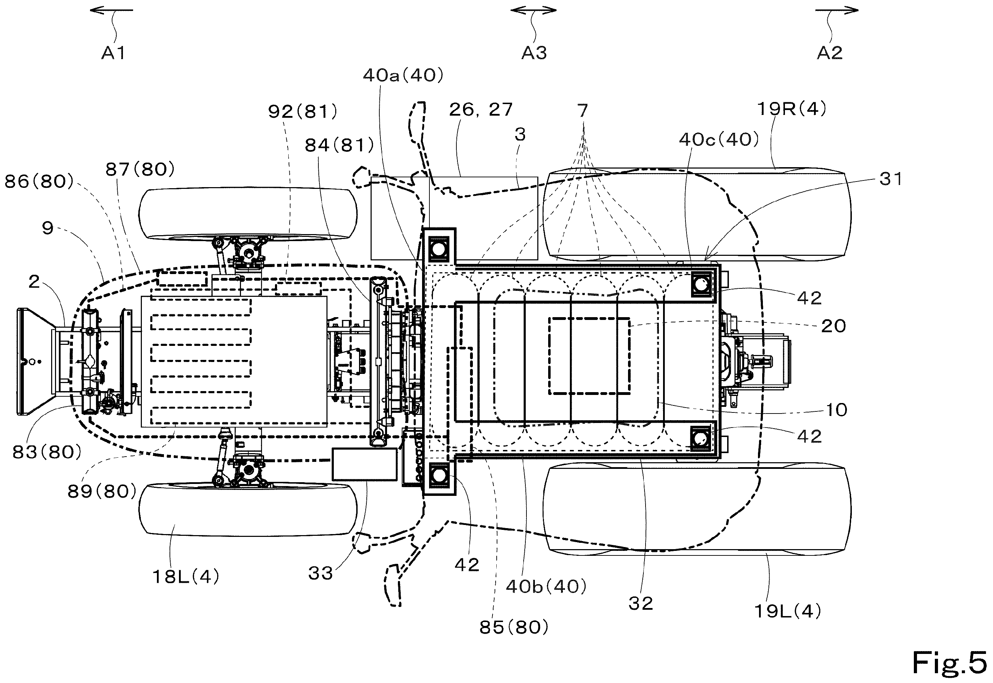

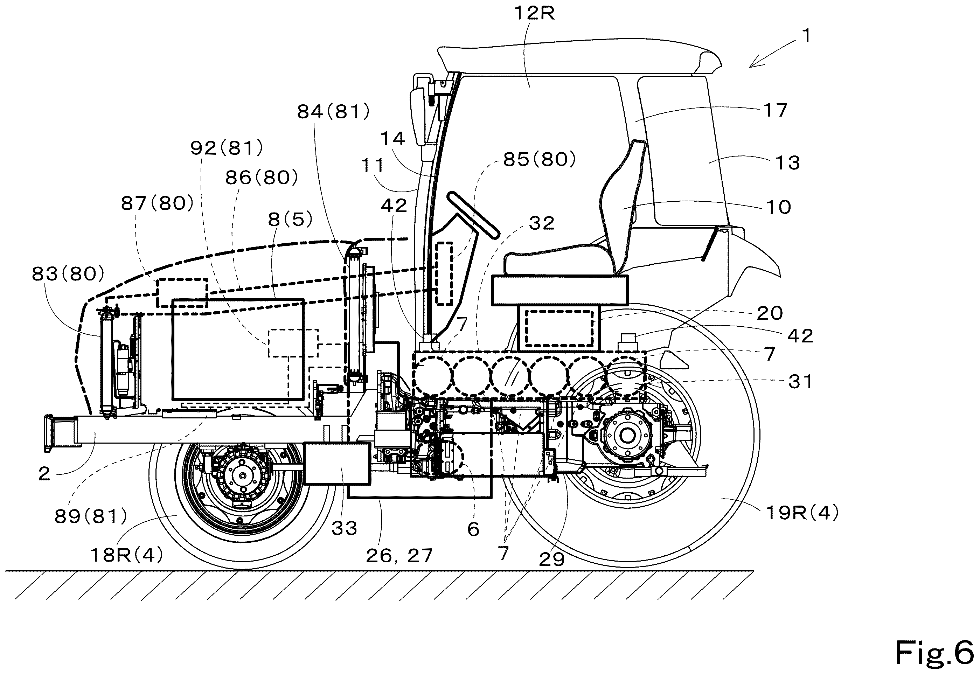

In the following description of the first embodiment, a direction indicated by arrow A1 in FIGS. 5 and 6 (a direction in which the working vehicle 1 travels forward) is referred to as a forward direction. A direction indicated by arrow A2 in FIGS. 5 and 6 (a direction in which the working vehicle 1 travels rearward) is referred to as a rearward direction. A direction indicated by arrow A3 in FIGS. 5 and 6 is referred to as a front-rear direction. The directions indicated by A1 to A3 are illustrated as appropriate in drawings such as FIGS. 5 and 6.

A horizontal direction (left-right direction) orthogonal to the front-rear direction (the direction indicated by arrow A3) is referred to as a vehicle body width direction K1 or a width direction (see FIG. 5). The vehicle body width direction K1 is a width direction of the working vehicle 1. A direction pointing rightward or leftward from a central portion in the width direction of the working vehicle 1 is referred to as a direction outward in the vehicle body width direction K1 (outward in the width direction). That is, the direction outward in the width direction is a direction pointing away in the vehicle body width direction K1 from a center in the width direction of the working vehicle 1. A direction opposite to the direction outward in the width direction is referred to as a direction inward in the vehicle body width direction K1 (inward in the width direction). That is, the direction inward in the width direction is a direction pointing toward the center in the width direction of the working vehicle 1 in the vehicle body width direction K1.

As illustrated in FIGS. 1 to 6, the working vehicle 1 includes a vehicle body 2, a cabin 3, a traveling device 4, and a drive device 5. A working device 49 is connectable to the vehicle body 2. In the cabin 3, an operator's seat 10 provided on the vehicle body 2 is stored. The cabin 3 is provided on a rear portion of the vehicle body 2. A hood 9 is provided on a front portion of the vehicle body 2. The traveling device 4 supports the vehicle body 2 and allows the vehicle body 2 to travel. The drive device 5 drives the traveling device 4.

The vehicle body 2, the cabin 3, the hood 9, the traveling device 4, and the drive device 5 included in the working vehicle 1 are described below.

As illustrated in FIGS. 1 to 4, the vehicle body 2 is provided in a lower portion of the working vehicle 1. The traveling device 4 is provided at both ends of the vehicle body 2 in the vehicle body width direction. The drive device 5 is provided on an upper portion of the vehicle body 2. The cabin 3 is provided on the rear portion of the vehicle body 2, and the hood 9 is provided on the front portion of the vehicle body 2. The cabin 3 and the hood 9 are placed on the vehicle body 2 and fixed to the vehicle body 2. That is, the vehicle body 2 according to the first embodiment is a member that supports the traveling device 4, the drive device 5, the cabin 3, and the hood 9. A transmission case 29 that transmits power from the drive device 5 to the traveling device 4 is provided on a rear portion of the vehicle body 2. A front portion of the vehicle body 2 is a combination of metal frame members or the like and can exhibit high rigidity.

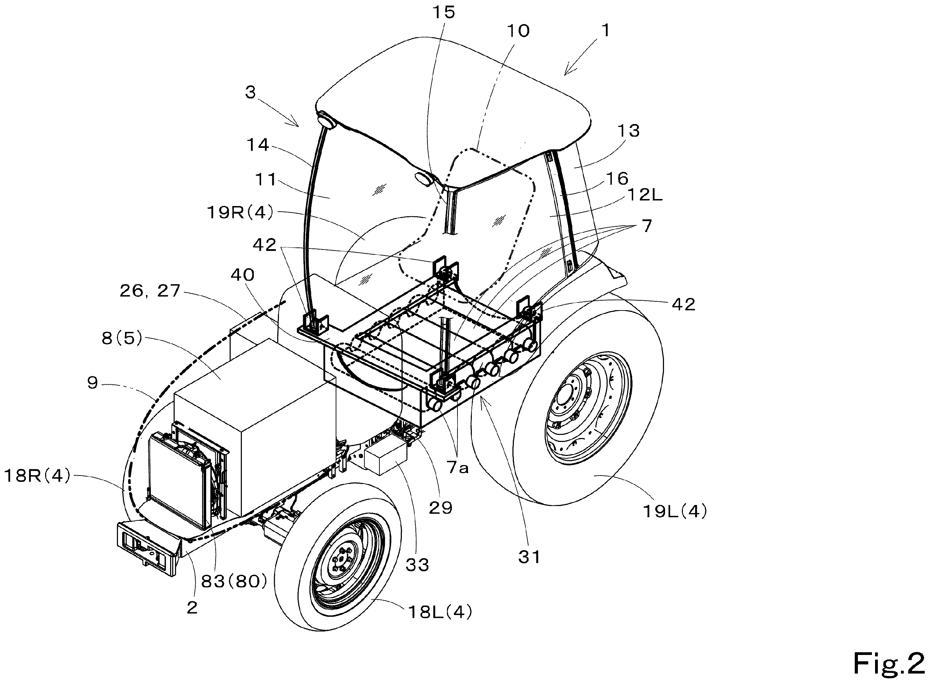

As illustrated in FIGS. 1 and 2, the cabin 3 is a box mounted above the rear portion of the vehicle body 2, and the operator's seat 10 is provided inside the cabin 3. The cabin 3 includes front, rear, left, and right panels and pillars provided between adjacent panels. Specifically, the cabin 3 includes a front panel 11 provided forward of the operator's seat 10, door panels 12L and 12R provided leftward and rightward of the operator's seat 10, respectively, and a rear panel 13 provided rearward of the operator's seat 10.

The cabin 3 includes a left front pillar 14, a right front pillar 15, a left rear pillar 16, and a right rear pillar 17. The left front pillar 14 is provided between the front panel 11 and the left door panel 12L. The right front pillar 15 is provided between the front panel 11 and the right door panel 12R. The left rear pillar 16 is provided between the rear panel 13 and the left door panel 12L. The right rear pillar 17 is provided between the rear panel 13 and the right door panel 12R.

The hood 9 is a cover mounted above the front portion of the vehicle body 2. The hood 9 is a metal plate or the like having a shape that is opened on a rear side and a lower side and is closed on a front side, a left side, a right side, and an upper side.

Note that the working vehicle 1 includes, inside the hood 9, a storage 62 in which members such as the fuel cell 8 are stored. By providing such a storage 62 inside the hood 9, the members such as the fuel cell 8 stored in the storage 62 are covered with the hood 9, and thus the members such as the fuel cell 8 can be protected from wind during travel, rain, mud, and dust by the hood 9.

The traveling device 4 supports the vehicle body 2 and allows the vehicle body 2 to travel on a road surface (ground). In other words, the traveling device 4 gives propelling force to the vehicle body 2. In the first embodiment, the traveling device 4 is front wheels 18 and rear wheels 19, which are rubber tires or the like. The rear wheels 19 are rubber tires having a larger diameter than the front wheels 18 and can support a large load applied to the rear portion of the vehicle body 2. The front wheels 18 include a left front wheel 18L at a left end of the front portion of the vehicle body 2 and a right front wheel 18R at a right end of the front portion of the vehicle body 2. The rear wheels 19 include a left rear wheel 19L at a left end of the rear portion of the vehicle body 2 and a right rear wheel 19R at a right end of the rear portion of the vehicle body 2. In the traveling device 4 according to the present invention, power is transmitted from the drive device 5 to either the front wheels 18 or the rear wheels 19 or to both of the front wheels 18 and the rear wheels 19. Note that a crawler or the like may be used as the traveling device 4 instead of the rubber tires.

As illustrated in FIGS. 1 to 6, the drive device 5 according to the present invention generates power to drive the traveling device 4. The drive device 5 according to the first embodiment uses electric power generated by the fuel cell. Specifically, the drive device 5 includes a drive motor 6 that generates power to drive the traveling device 4, the fuel cell 8 that supplies electric power to the drive motor 6, and a battery 20 to store electric power supplied from the fuel cell 8. The working vehicle 1 includes the tank 7 that supplies hydrogen gas for fuel to the fuel cell 8.

The drive motor 6, the fuel cell 8, the battery 20, and the tank 7 included in the drive device 5 are described below.

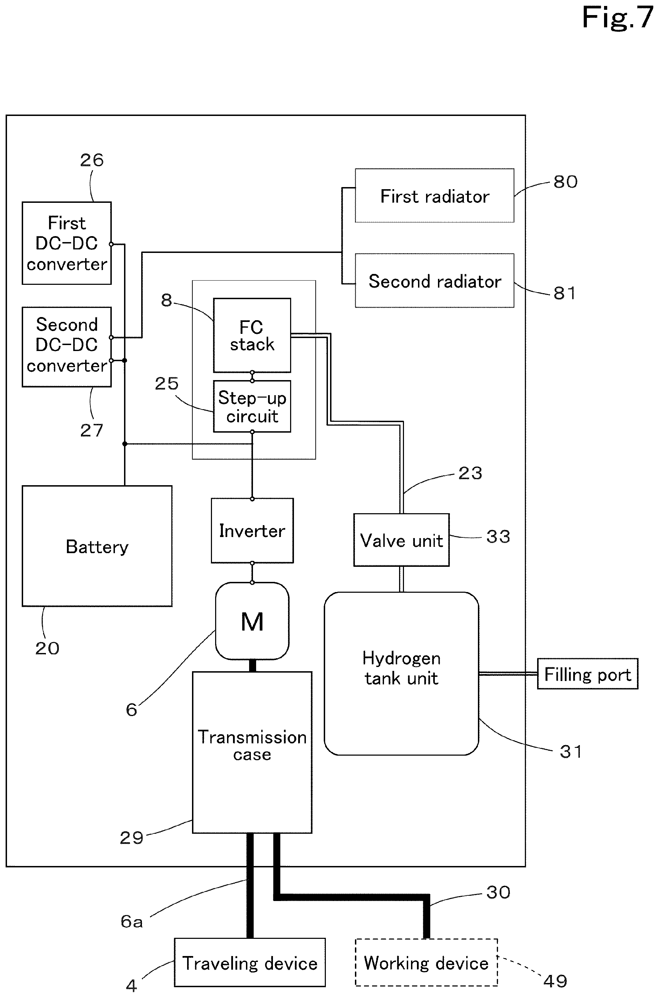

FIG. 7 is a block diagram of the drive device 5 provided in the working vehicle 1 according to the first embodiment.

As illustrated in FIGS. 1 to 7, the drive motor 6 is, for example, a permanent magnet embedded type DC or AC synchronous motor, a winding field type synchronous motor, or the like. The drive motor 6 is a single drive motor 6 provided rearward of the fuel cell 8. The drive motor 6 includes an output shaft 6a extending rearward and drives the output shaft 6a to rotate. A rear end of the output shaft 6a is connected to the transmission case 29.

A transmission, a clutch, a differential gear, and the like that change speed stages of power transmitted to the output shaft 6a are provided in the transmission case 29. The transmission case 29 decelerates or accelerates power input from the output shaft 6a and outputs the decelerated or accelerated power to the front wheels 18 and/or the rear wheels 19 of the traveling device 4. For example, power output to the traveling device 4 is transmitted only to the rear wheels 19 in a case where the working vehicle 1 is rear-wheel drive, and the power output to the traveling device 4 is transmitted to both of the front wheels 18 and the rear wheels 19 in a case where the working vehicle 1 is four-wheel drive.

Note that the drive motor 6 according to the first embodiment is provided at only one position on the upper portion of the vehicle body 2, and power generated by the single drive motor 6 is distributed into the front wheels 18 and/or the rear wheels 19. However, the number of drive motors 6 included in the drive device 5 according to the present invention and the like may be changed as appropriate. Note that the drive motor 6 is preferably provided at a center of the vehicle body 2 in the left-right direction midway between the front wheels 18 and the rear wheels 19. In a case where the drive motor 6 is provided midway between the front wheels 18 and the rear wheels 19, a weight of the drive motor 6 is equally applied to both of the front wheels 18 and the rear wheels 19. This can stabilize travelling performance.

In the working vehicle 1 according to the first embodiment, the transmission case 29 not only transmits the decelerated or accelerated power to the traveling device 4, but also transmits a part of the power to the working device 49. Specifically, a power take-off shaft (PTO shaft) is provided in a rear portion of the working vehicle 1 (on a rear end of the transmission case 29), and power transmitted (input) to the transmission case 29 is output not only to the traveling device 4, but also to the PTO shaft. In this way, the working device 49 (implement) can be actuated by using electric power generated by the fuel cell.

A coupler (three-point linkage) may be provided on the rear portion of the working vehicle 1 according to the first embodiment (the rear end of the transmission case 29). Such a three-point linkage allows various implements (working devices 49) to be attached rearward of the working vehicle 1 and change their postures or be driven, thereby allowing the working vehicle 1 to perform various kinds of work.

The working device 49 is an implement such as a cultivator, a rotary, a mulcher, a hammer knife mower, a ridge coating machine, a conveying machine, a seeding machine, a harrow, or a ridge making machine.

Note that the PTO shaft and the three-point linkage need not necessarily be provided. The PTO shaft and the three-point linkage can be omitted in a case where the working vehicle 1 is an agricultural machine such as a combine or a rice planter, a construction machine, or the like. A hydraulic pump that is driven by power output by the drive motor 6, an electric motor different from the drive motor 6, or the like may be provided separately from the drive motor 6, and the working device 49 (implement) may be actuated by a hydraulic pressure or electric power.

The fuel cell 8 used in the drive device 5 according to the first embodiment generates electricity by causing hydrogen, which is fuel, to perform electrode reaction with oxygen. The hydrogen supplied to the fuel cell 8 is occluded in the tank 7. In the fuel cell 8, electrode layers are stacked. The hydrogen gas in the tank 7 is supplied to the fuel cell 8, and the electrode reaction is performed in the fuel cell 8. The drive device 5 according to the present invention has a structure for driving the drive motor 6 by using electricity taken out by the electrode reaction in the fuel cell 8. In the electrode reaction in the fuel cell 8, carbon dioxide, which is always discharged, for example, in combustion reaction of an internal-combustion engine, is not discharged. Therefore, the working vehicle 1 according to the present invention, which is driven by using electric power generated by a fuel cell, is promising for realization of decarbonization.

Specifically, the fuel cell 8 includes a plurality of stacked unit cells each including two kinds of electrodes, specifically, a positive electrode and a negative electrode inside a battery casing having a box shape. The positive electrode and the negative electrode are made of a positive-electrode material and a negative-electrode material, respectively, and have a sheet shape or a film shape. Each unit cell includes a single positive electrode and a single negative electrode, and adjacent unit cells are separated by a separator. The hydrogen gas in the tank 7 is supplied to the positive electrode, and oxygen gas (oxidation gas) compressed by a compressor or the like is supplied to the negative electrode, and battery reaction (electric power generation) is performed in each unit cell. The fuel cell 8 generates electric power of a voltage and a current that can drive the drive device 5 by gathering electric power generated by the unit cells.

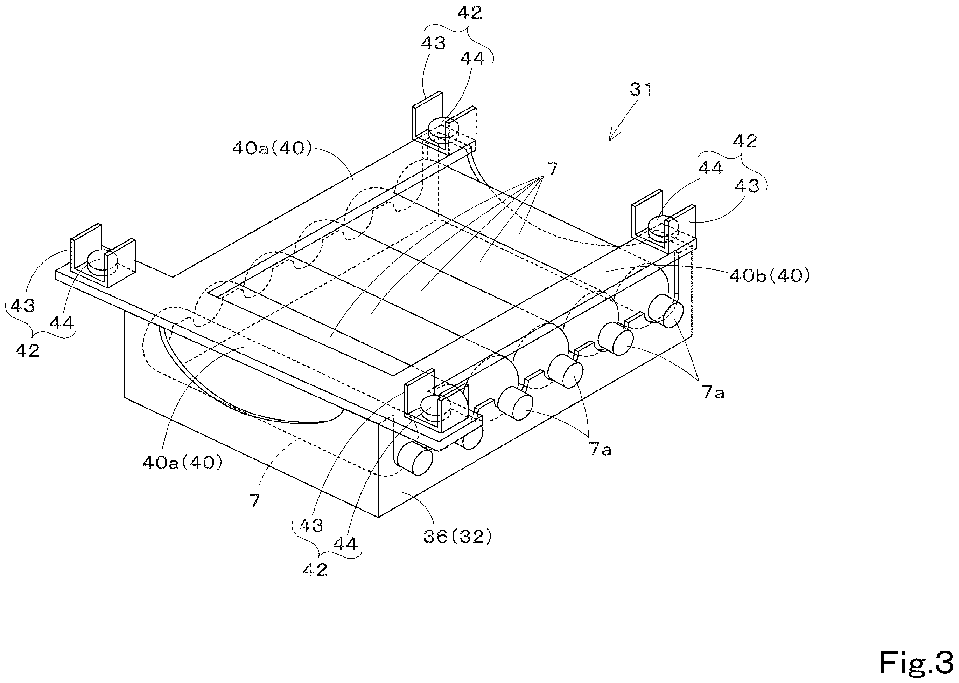

As illustrated in FIGS. 3 to 5, in the first embodiment, the fuel cell 8 is stored inside the hood 9 provided above the front portion of the vehicle body 2. To the fuel cell 8, hydrogen gas is supplied from the tank 7 through a gas pipe 23 (see FIG. 7). A first condenser 83 of a first heat exchanger 80, which will be described later, is provided forward of the fuel cell 8 inside the hood 9. A second condenser 84 of a second heat exchanger 81, which will be described later, is provided rearward of the fuel cell 8 inside the hood 9.

As illustrated in FIG. 7, a step-up circuit 25 that steps up electric power generated by the fuel cell 8 is provided downstream of the drive motor 6 (downstream on an electric power transmission path). The step-up circuit 25 steps up the electric power generated by the fuel cell 8, and thus a voltage for activating the drive motor 6 can be secured.

The step-up circuit 25 includes a circuit for stepping up the electric power generated by the fuel cell 8, and the electric power thus stepped up is sent to the drive motor 6 and drives the drive motor 6. Note that some electric components used in the working vehicle 1 operate at a voltage lower than the drive motor 6. To such electric components that operate at a low voltage (light electric components), electric power stepped down by a step-down circuit including a first DC-DC converter 26 and a second DC-DC converter 27 is supplied. In the first embodiment, examples of the electric components that operate at a low voltage include the first heat exchanger 80, the second heat exchanger 81, and the battery 20.

The battery 20 accumulates electricity generated by the fuel cell 8. Electric power stepped down by the first DC-DC converter 26 is supplied to the battery 20, and electric power stepped down by the second DC-DC converter 27 is supplied to the first heat exchanger 80 and the second heat exchanger 81.

Note that in the working vehicle 1 according to the first embodiment, the battery 20 is provided below the operator's seat 10. In a case where the battery 20 is provided below the operator's seat 10, the battery 20, which is heavy in weight, is located in a lower portion of the vehicle. This can lower a center of gravity of the working vehicle 1 and stabilize traveling performance.

The drive motor 6 is, for example, a permanent magnet embedded type DC or AC synchronous motor, a winding field type synchronous motor, or the like. The drive motor 6 is a single drive motor 6 provided rearward of the fuel cell 8. The drive motor 6 includes the output shaft 6a extending rearward and drives the output shaft 6a to rotate. The rear end of the output shaft 6a is connected to the transmission case 29.

A transmission, a clutch, a differential gear, and the like that change speed stages of power transmitted to the output shaft 6a are provided in the transmission case 29. The transmission case 29 decelerates or accelerates power input from the output shaft 6a and outputs the decelerated or accelerated power to the front wheels 18 and/or the rear wheels 19 of the traveling device 4. For example, power output to the traveling device 4 is transmitted only to the rear wheels 19 in a case where the working vehicle 1 is rear-wheel drive, and the power output to the traveling device 4 is transmitted to both of the front wheels 18 and the rear wheels 19 in a case where the working vehicle 1 is four-wheel drive.

As illustrated in FIGS. 2 and 3, the tank 7 is provided below the cabin 3 as a tank unit 31 including the tank 7. The tank unit 31 includes a tank casing 32 in which a plurality of tanks 7 can be stored. In the first embodiment, six tanks 7 are stored in the tank casing 32. Brackets 42 that elastically support lower ends of the left front pillar 14, the right front pillar 15, the left rear pillar 16, and the right rear pillar 17 of the cabin 3 are provided on an upper portion of the tank unit 31. In the tank unit 31, the gas pipe 23 (see FIG. 7) that guides the hydrogen gas in the tank 7 is provided for each tank 7. A valve unit 33 that, for example, mixes hydrogen gas introduced through the gas pipes 23, adjusts a flow rate of the hydrogen gas to a predetermined flow rate, and sends the hydrogen gas to the fuel cell 8 is provided at leading ends of the gas pipes 23.

Next, the tanks 7, the tank casing 32, the brackets 42, the gas pipes 23, and the valve unit 33 are described.

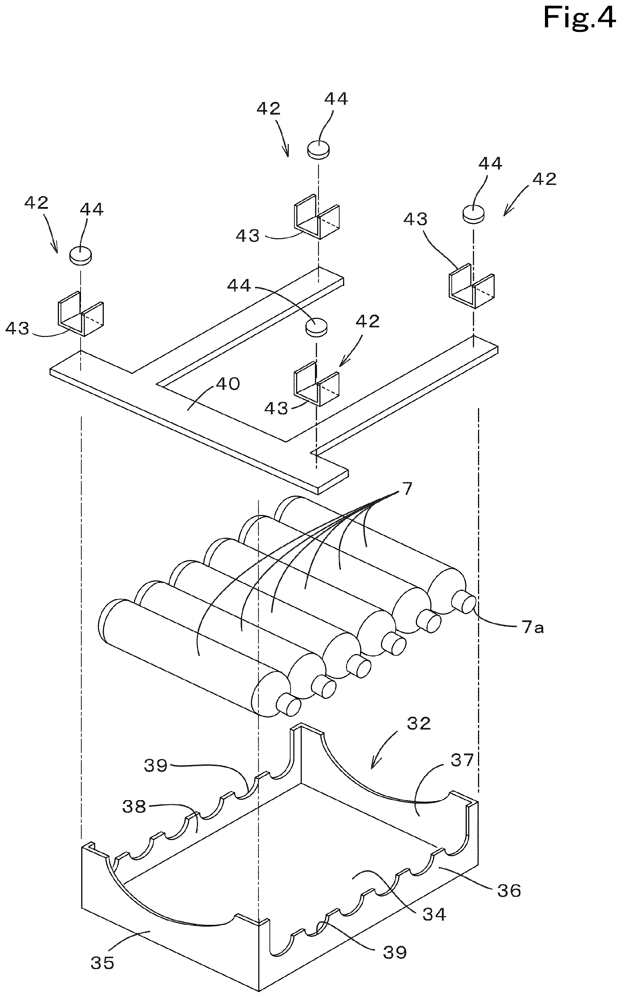

As illustrated in FIGS. 3 and 4, a cylinder having a long cylindrical shape made of a material such as a hard synthetic resin strengthened by carbon fibers or glass fibers is used as each of the tanks 7. In the first embodiment, the six tanks 7 (cylinders) are arranged in the front-rear direction in the tank casing 32 so that a shaft center of each tank 7 (cylinder) is directed in the vehicle body width direction.

Each tank 7 includes a neck 7a at a front end thereof. The gas pipe 23 is coupled to the neck 7a of the tank 7 with a safety valve (solenoid valve) (not illustrated) interposed therebetween.

**In** the first embodiment, all of the plurality of tanks 7 are provided between the front wheels 18 and the rear wheels 19. In a case where the tanks 7, which are heavy in weight, are provided between the front wheels 18 and the rear wheels 19, the weight of the tanks 7 is almost equally applied to both of the front wheels 18 and the rear wheels 19. This can stabilize traveling performance.

The tank casing 32 can accommodate a plurality of tanks 7 and is fixed (rigidly fixed) to the vehicle body 2 with use of a fastening member such as a bolt or by welding. The tank casing 32 has a box shape having a larger inside dimension than the tanks 7 and accommodates the plurality of tanks 7. The tank casing 32 according to the first embodiment is made of a steel material or the like having a thickness that can thermally and physically protect the tanks 7 from an outside and has a box shape opened on an upper side.

As illustrated in FIG. 3, the tank casing 32 according to the first embodiment includes a bottom portion 34, a front wall portion 35, a left wall portion 36, a rear wall portion 37, and a right wall portion 38. The bottom portion 34 has a rectangular plate shape that is longer in the front-rear direction than in the vehicle body width direction. The front wall portion 35 stands along the up-down direction on a front edge of the bottom portion 34. The left wall portion 36 stands along the up-down direction on a left edge of the bottom portion 34. The rear wall portion 37 stands along the up-down direction on a rear edge of the bottom portion 34. The right wall portion 38 stands along the up-down direction on a right edge of the bottom portion 34. The bottom portion 34 of the tank casing 32 is fixed (rigidly fixed) to the upper portion of the vehicle body 2 by means such as fastening using a bolt or the like or welding.

An upper edge of the front wall portion 35 and an upper edge of the rear wall portion 37 of the tank casing 32 have a cutout portion 39 that is recessed downward in an arc shape. The front wall portion 35 and the rear wall portion 37 each have four cutout portions 39, which correspond to the number of stored tanks 7. A single tank 7 is stored in each cutout portion 39 so that the neck 7a is fitted in the recessed portion. By fitting the neck 7a into the recessed portion of the cutout portion 39, the tank 7 is stored in the tank casing 32 so that the tank 7 does not shake from side to side.

As illustrated in FIG. 4, a beam member 40 is provided on an upper portion of the tank casing 32. The beam member 40 has a comb shape (a shape of a Greek letter π) combining a first plate member 40a having an elongated shape extending along the vehicle body width direction and a second plate member 40b and a third plate member 40c having an elongated shape extending along the front-rear direction. The first plate member 40a has an elongated plate shape extending along the vehicle body width direction. Front ends of the second plate member 40b and the third plate member 40c are coupled to a rear end of the first plate member 40a. The second plate member 40b is coupled to a left end of the first plate member 40a, and the third plate member 40c is coupled to a right end of the first plate member 40a.

The third plate member 40c extends in the vehicle body width direction. The beam member 40 couples an upper end of a front portion of the left wall portion 36 and an upper end of a front portion of the right wall portion 38 in the vehicle body width direction. The beam member 40 is located above front portions of the tanks 7 stored in the tank casing 32 and hold the front portions of the tanks 7 together with the front wall portion 35 so that the tanks 7 do not shake up and down.

The first plate member 40a of the beam member 40 is longer than a width dimension (outside dimension) of the tank casing 32 along the vehicle body width direction, and a left end and a right end of the first plate member 40a protrude beyond the tank casing 32 outward in the width direction. The bracket 42 is provided on an upper portion of a left end and an upper portion of a right end of the first plate member 40a that protrude beyond the tank casing 32 outward in the width direction. The second plate member 40b and the third plate member 40c of the beam member 40 are spaced apart by a distance identical to a width dimension (outside dimension) of the tank casing 32 along the vehicle body width direction. The bracket 42 is provided on a rear end of the second plate member 40b and a rear end of the third plate member 40c.

Note that although the tank casing 32 according to the first embodiment has a box shape, a shelf, a rack, or the like that can accommodate the tanks 7 may be used as the tank casing 32 according to the present invention. Although an example in which both of the front wall portion 35 and the rear wall portion 37 of the tank casing 32 according to the present embodiment have the cutout portions 39 has been described in the first embodiment, either the front wall portion 35 or the rear wall portion 37 (one of the front wall portion 35 and the rear wall portion 37 where the necks 7a of the tanks 7 are provided) may have the cutout portions 39.

The brackets 42 are members that support a lower end of the cabin 3 on the vehicle body 2. Specifically, the brackets 42 support lower ends of the front pillars 14 and 15 and the rear pillars 16 and 17 provided on the left and right of the cabin 3. Each of the brackets 42 includes a bracket body 43 that is fitted with a lower end of a corresponding one of the front pillars 14 and 15 and the rear pillars 16 and 17 and a mount member 44 that elastically supports, on the bracket body 43, the lower end of the corresponding one of the front pillars 14 and 15 and the rear pillars 16 and 17.

As illustrated in FIG. 7, each of the plurality of tanks 7 is provided with the gas pipe 23, and the gas pipe 23 guides the hydrogen gas in the tank 7 to the valve unit 33. As the gas pipe 23, a hose made of a composite material combining materials such as a synthetic resin that can prevent transmission of hydrogen gas and a metal wire having flexibility, or the like is used.

The valve unit 33 collects the hydrogen gas sent from the tanks 7 through the gas pipes 23 and mixes the hydrogen gas as appropriate. The valve unit 33 includes a solenoid valve or the like that can adjust a pressure and a flow rate of the hydrogen gas, and sends the hydrogen gas to the fuel cell 8 after adjusting the hydrogen gas to a pressure and a flow rate suitable for electric power generation in the fuel cell 8.

The working vehicle 1 includes the first heat exchanger 80 as a device that can adjust a temperature of the fuel cell 8. The first heat exchanger 80 can adjust the temperature of the fuel cell 8 to a temperature at which electric power generation efficiency is high (approximately 70°C in a case of a hydrogen fuel cell). The temperature of the fuel cell 8 can be measured at the electrodes provided in the fuel cell. Note that the first heat exchanger 80 is a device that increases the temperature of the fuel cell 8 to a temperature at which electric power generation efficiency is high, and the above temperature is an example and is not restrictive.

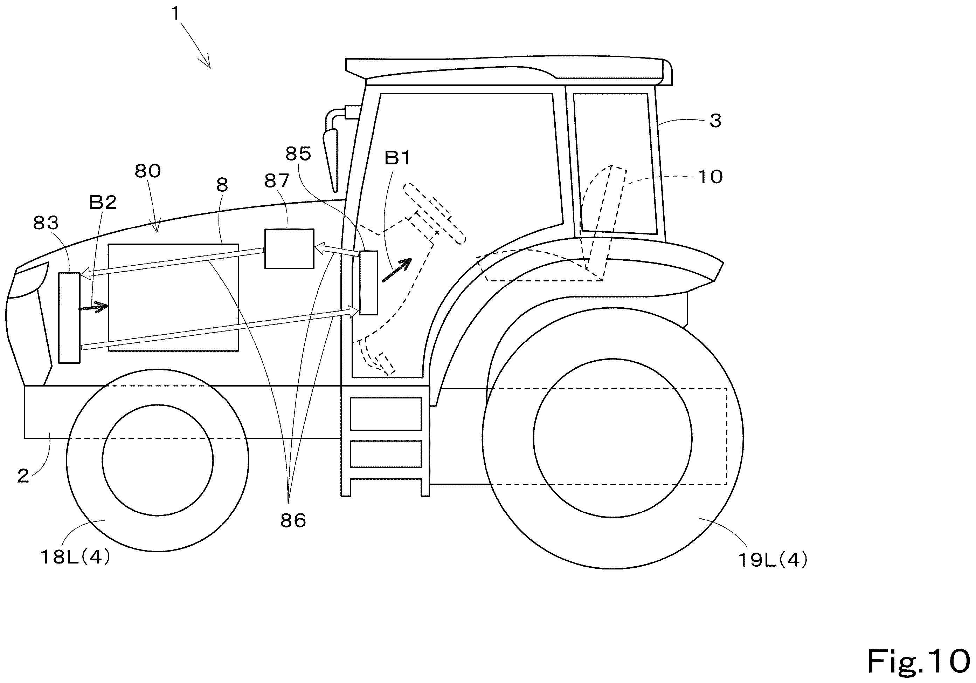

FIG. 10 illustrates a schematic configuration of the first heat exchanger 80. The first heat exchanger 80 supplies air cooled by heat exchange with a refrigerant into the cabin 3 (see arrow B1) and supplies heat of the refrigerant heated by heat exchange to the fuel cell 8 (see arrow B2).

The first heat exchanger 80 includes the first condenser 83, a first evaporator 85, a first compressor 87, and a first pipe 86.

The first condenser 83 is provided forward of the fuel cell 8 inside the hood 9. As the first condenser 83, a heat exchanger having a large surface area that uses a metal tube, a metal plate, or the like is used. The refrigerant compressed by the first compressor 87 is supplied to the first condenser 83. In the first condenser 83, the refrigerant is cooled by heat release. In other words, the first condenser 83 releases heat of the refrigerant. The heat released from the first condenser 83 is supplied to the fuel cell 8.

The first evaporator 85 cools air in the cabin 3 by using the refrigerant cooled by the heat release in the first condenser 83. The first evaporator 85 is provided in a front portion inside the cabin 3.

The white arrows in FIG. 10 indicate a flow of the refrigerant in the first heat exchanger 80. In the first evaporator 85, air is cooled by heat exchange with the refrigerant, and the cooled air is supplied into the cabin 3 (see arrow B1). The refrigerant heated by the heat exchange in the first evaporator 85 is compressed by the first compressor 87 and is supplied to the first condenser 83 through the first pipe 86. In the first condenser 83, heat of the refrigerant heated by the heat exchange in the first evaporator 85 is supplied to the fuel cell 8 (see arrow B2).

The first heat exchanger 80 provided in the working vehicle 1 can thus cool the inside of the cabin 3 and heat the fuel cell 8. The temperature of the electrodes provided in the fuel cell 8 can be thus adjusted to a temperature at which electric power generation efficiency is high (approximately 70°C in a case of a hydrogen fuel cell).

The working vehicle 1 may include the second heat exchanger 81 in addition to the first heat exchanger 80. FIG. 1 illustrates the working vehicle 1 including the first heat exchanger 80 and the second heat exchanger 81. The working vehicle 1 including the first heat exchanger 80 and the second heat exchanger 81 is described below. However, description of a configuration identical to that described above may be omitted.

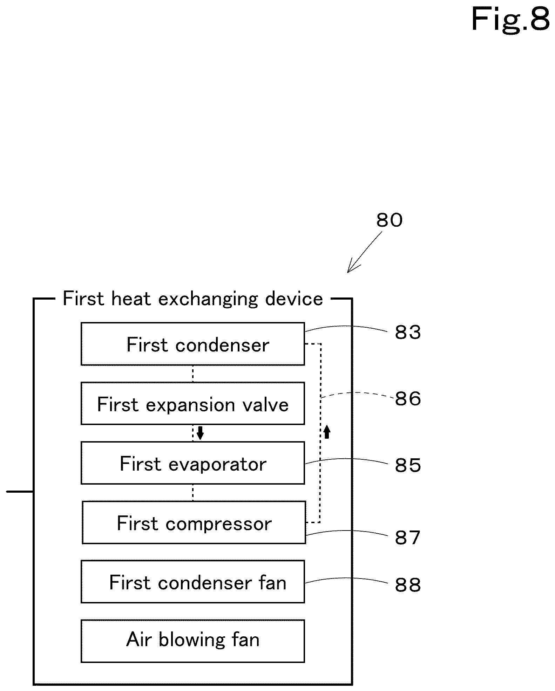

As illustrated in FIG. 8, the first heat exchanger 80 includes the first condenser 83, the first evaporator 85, the first pipe 86, and the first compressor 87.

The first heat exchanger 80 performs heat exchange between the inside of the hood 9 and the inside of the cabin 3. The first heat exchanger 80 cools the inside of the cabin 3 and heats the inside of the hood 9.

The first condenser 83 is provided forward of the fuel cell 8 inside the hood 9. A first condenser fan 88 is provided rearward of the first condenser 83. The first condenser fan 88 blows, as hot air, heat released by the first condenser 83 to the fuel cell 8. The first condenser fan 88 is a heat guider that guides heat released from the first condenser to the fuel cell 8. However, the first condenser 83 may be provided at a position different from the inside of the hood 9, and a pipe that guides heat released from the first condenser 83 to the fuel cell 8 may be provided as a heat guider.

The first evaporator 85 is provided in a lower front portion of the cabin 3. An air blowing fan (not illustrated) is provided beside the first evaporator 85. The air blowing fan sends, as cool air, air cooled by the first evaporator 85 into the cabin 3.

The first compressor 87 is provided rearward of the first condenser 83 inside the cabin 3.

As indicated by the dotted line in FIG. 8, the first pipe 86 connects the first condenser 83, the first evaporator 85, and the first compressor 87. As the first pipe 86, a metal pipe made of a metal such as copper or aluminum is used. The first pipe 86 is provided along a circulating path starting from the first condenser 83 and returning to the first condenser 83 after passing the first evaporator 85 and then the first compressor 87. This allows the refrigerant to circulate through the first condenser 83, the first evaporator 85, and the first compressor 87. Note that a receiver tank in which the refrigerant is stored, an expansion valve, and the like may be provided as appropriate on a path of the first pipe 86.

The second heat exchanger 81 is provided rearward of the fuel cell 8 inside the hood 9. The second heat exchanger 81 cools the fuel cell 8. That is, the working vehicle 1 illustrated in FIG. 1 adjusts the fuel cell 8 to an optimum temperature by using the first heat exchanger 80 that heats the fuel cell 8 and the second heat exchanger 81 that cools the fuel cell 8 in combination.

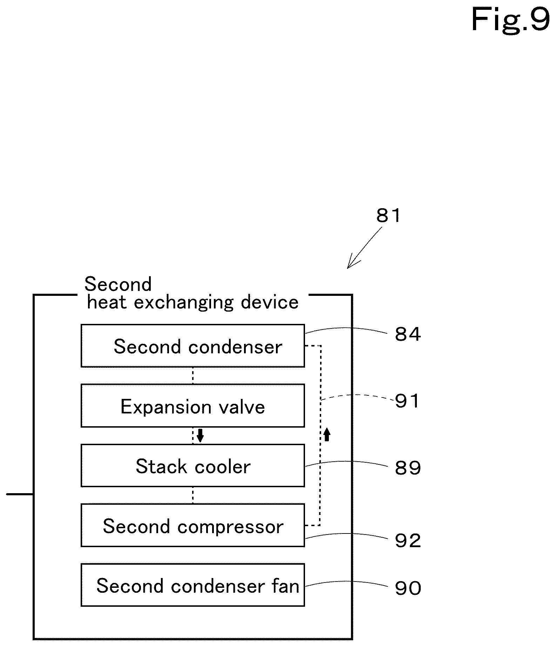

As illustrated in FIG. 9, the second heat exchanger 81 includes a stack cooler 89, a second condenser 84, a second condenser fan 90, a second pipe 91, and a second compressor 92.

The stack cooler 89 cools the fuel cell 8 by using a cooled refrigerant. The stack cooler 89 includes a duct for distributing the refrigerant in or around a battery casing of the fuel cell 8, and the stack cooler 89 is cooled by performing heat exchange with the refrigerant flowing through the duct. The refrigerant heated by heat absorption in the stack cooler 89 is sent to the second compressor 92.

The second compressor 92 is a member that compresses the refrigerant that has absorbed heat by the cooling in the stack cooler 89, as with the first compressor 87. The refrigerant compressed by the second compressor 92 is supplied to the second condenser 84.

The second condenser 84 discharges heat of the refrigerant compressed by the second compressor 92 to an outside of the hood 9. The second condenser 84 according to the first embodiment is provided rearward of the fuel cell 8 inside the hood 9. As the second condenser 84, a heat exchanger similar to the first condenser 83 is used. To the second condenser 84, the refrigerant compressed by the second compressor 92 is supplied through the second pipe 91. In the second condenser 84, the refrigerant is cooled by heat release. The second condenser fan 90 is provided forward or rearward of the second condenser 84. The second condenser fan 90 discharges, as exhaust hot air, heat released by the second condenser 84 to an outside of the hood 9.

As indicated by the dotted line in FIG. 9, the second pipe 91 circulates through three members, specifically, the second condenser 84, the stack cooler 89, and the second compressor 92. As the second pipe 91, a metal pipe made of a metal such as copper or aluminum is used, as with the first pipe 86. The second pipe 91 is provided along a circulating path starting from the second condenser 84 and returning to the second condenser 84 after passing the stack cooler 89 and then the second compressor 92.

Note that a receiver tank in which the refrigerant is stored and the like may be provided as appropriate on a path of the second pipe 91.

### <Second Embodiment>

Next, a working vehicle 1 according to a second embodiment is described.

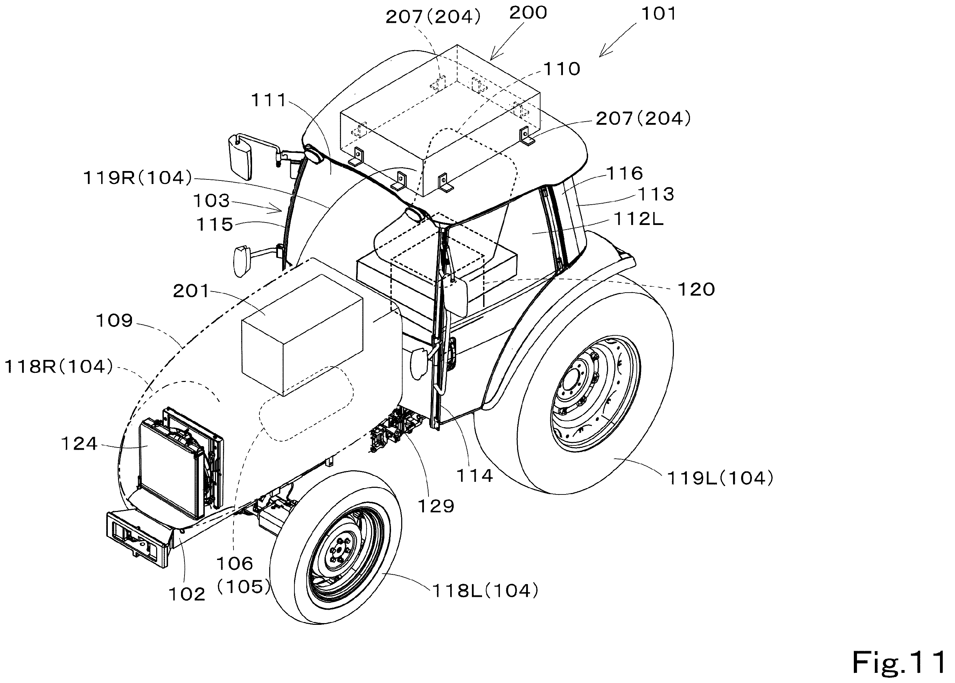

FIG. 11 is a perspective view of a tractor, which is an example of a working vehicle 101 according to the second embodiment. The working vehicle 101 according to the second embodiment is a fuel cell vehicle (FCV) that generates electric power by electrode reaction of hydrogen, which is fuel. The working vehicle 101 includes a tank 107 in which fuel such as hydrogen is stored and a fuel cell 108 that generates electric power by using the fuel such as hydrogen gas stored in the tank 107.

Note that "store" according to the second embodiment encompasses not only storing liquefied hydrogen gas or the like, but also occlusion onto a metal compound or the like.

Since fuel (e.g., methane) other than hydrogen is sometimes used as fuel for a fuel cell vehicle, the working vehicle 101 according to the second embodiment also encompasses a fuel cell vehicle that generates electric power by using fuel such as methane. In this case, the fuel such as methane is stored in the tank 107, and the fuel cell 108 generates electric power by using the fuel such as methane.

In the first embodiment, a tractor is taken as an example of the working vehicle 101. However, the working vehicle 101 according to the second embodiment and the third embodiment is not limited to a tractor and may be, for example, an agricultural machine (e.g., a combine or a rice planter) other than a tractor, a construction machine, a utility vehicle, or the like.

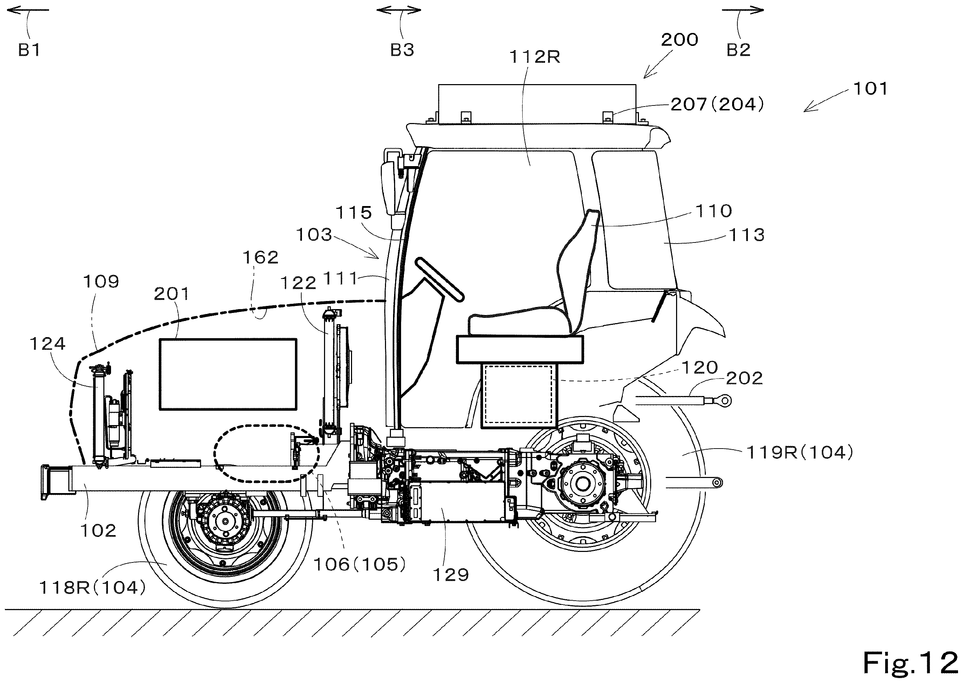

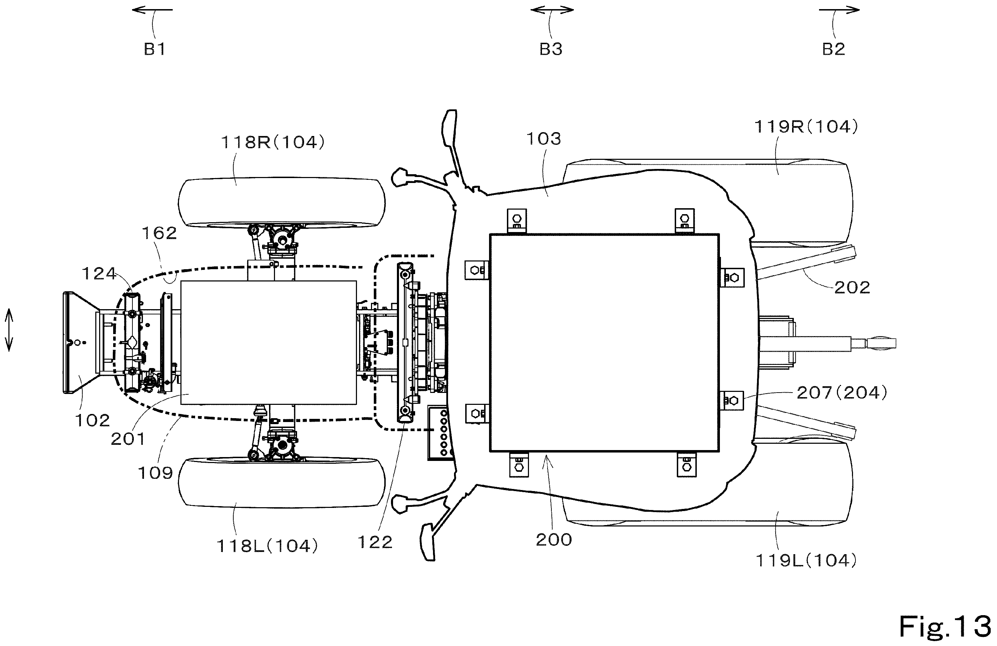

In the following description of the second embodiment and the third embodiment, a direction indicated by arrow B1 in FIGS. 12 and 13 (a direction in which the working vehicle 101 travels forward) is referred to as a forward direction. A direction indicated by arrow B2 in FIGS. 12 and 13 (a direction in which the working vehicle 101 travels rearward) is referred to as a rearward direction. A direction indicated by arrow B3 in FIGS. 12 and 13 is referred to as a front-rear direction. The directions indicated by arrows A1 to A3 are also illustrated as appropriate in drawings other than FIGS. 12 and 13.

A horizontal direction (left-right direction) orthogonal to the front-rear direction (direction indicated by arrow B3) is referred to as a vehicle body width direction K1 or a width direction (see FIG. 13). The vehicle body width direction K1 is a width direction of the working vehicle 101. A direction pointing rightward or leftward from a central portion in the width direction of the working vehicle 101 is referred to as a direction outward in the vehicle body width direction K1 (outward in the width direction). That is, the direction outward in the width direction is a direction pointing away in the vehicle body width direction K1 from a center in the width direction of the working vehicle 101. A direction opposite to the direction outward in the width direction is referred to as a direction inward in the vehicle body width direction K1 (inward in the width direction). That is, the direction inward in the width direction is a direction pointing toward the center in the width direction of the working vehicle 101 in the vehicle body width direction K1.

As illustrated in FIGS. 11 to 13, the working vehicle 101 includes a vehicle body 102, a traveling device 104, and a drive device 105. The vehicle body 102 includes a cabin 103 and a hood 109. To the vehicle body 102, a working device is connectable. In the cabin 103, an operator's seat 110 provided on the vehicle body 102 is stored. The cabin 103 is provided on a rear portion of the vehicle body 102. The hood 109 is provided on a front portion of the vehicle body 102. The traveling device 104 supports the vehicle body 102 and allows the vehicle body 102 to travel. The drive device 105 drives the traveling device 104.

The vehicle body 102, the cabin 103, the hood 109, the traveling device 104, and the drive device 105 included in the working vehicle 101 are described below.

As illustrated in FIGS. 11 to 13, the traveling device 104 is provided at both ends of the vehicle body 102 in the vehicle body width direction. The drive device 105 is provided on an upper portion of the vehicle body 102. The cabin 103 is provided on the rear portion of the vehicle body 102, and the hood 109 is provided on the front portion of the vehicle body 102. The cabin 103 and the hood 109 are placed on the vehicle body 102 and fixed to the vehicle body 102. That is, the vehicle body 102 according to the second embodiment is a member that supports the traveling device 104, the drive device 105, the cabin 103, and the hood 109. A transmission case 129 that transmits power from the drive device 105 to the traveling device 104 is provided on a rear portion of the vehicle body 102. A front portion of the vehicle body 102 is a combination of metal frame members or the like and exhibits high rigidity.

As illustrated in FIGS. 11 and 12, the cabin 103 is a box mounted above the rear portion of the vehicle body 102, and the operator's seat 110 is provided inside the cabin 103. The cabin 103 includes front, rear, left, and right panels and pillars provided between adjacent panels. Specifically, the cabin 103 includes a front panel 111 provided forward of the operator's seat 110, door panels 112L and 112R provided leftward and rightward of the operator's seat 110, respectively, and a rear panel 113 provided rearward of the operator's seat 110.

The cabin 103 includes a left front pillar 114, a right front pillar 115, a left rear pillar 116, and a right rear pillar. The left front pillar 114 is provided between the front panel 111 and the left door panel 12L. The right front pillar 115 is provided between the front panel 111 and the right door panel 112R. The left rear pillar 116 is provided between the rear panel 113 and the left door panel 112L. The right rear pillar is provided between the rear panel 113 and the right door panel 112R.

The hood 109 is a cover mounted above the front portion of the vehicle body 102. The hood 109 is a metal plate or the like and has a shape that is opened on a rear side and a lower side and is closed on a front side, a left side, a right side, and an upper side.

Note that the working vehicle 101 includes, inside the hood 109, a storage 162 in which a fuel cell unit 200, a power control unit 201, a drive motor 106, and the like are stored. By providing such a storage 162 inside the hood 109, members such as the fuel cell 108 stored in the storage 162 are covered with the hood 109, and thus the members such as the fuel cell 108 can be protected from wind during travel, rain, mud, and dust by the hood 109.

The traveling device 104 supports the vehicle body 102 and allows the vehicle body 102 to travel on a road surface (ground). In other words, the traveling device 104 gives propelling force to the vehicle body 102. In the second embodiment, the traveling device 104 is a left front wheel 118L, a right front wheel 118R, a left rear wheel 119L, and a right rear wheel 119R made of rubber or the like. The left rear wheel 119L and the right rear wheel 119R are rubber tires having a larger diameter than the left front wheel 118L and the right front wheel 118R and support a large load applied to the rear portion of the vehicle body 102. In the traveling device 104 according to the present invention, power is transmitted from the drive device 105 to the left front wheel 118L, the right front wheel 118R, the left rear wheel 119L, or the right rear wheel 119R or all of the left front wheel 118L, the right front wheel 118R, the left rear wheel 119L, and the right rear wheel 119R. Note that a crawler or the like may be used as the traveling device 104 instead of the rubber tires.

As illustrated in FIGS. 11 to 16, the drive device 105 according to the present embodiment is provided on the vehicle body 102 and generates power to drive the traveling device 104. The drive device 105 according to the second embodiment uses electric power generated by the fuel cell. Specifically, the drive device 105 includes a drive motor 106 that generates power to drive the traveling device 104, the fuel cell 108 that supplies electric power to the drive motor 106, and a battery 120 to store electric power supplied to the fuel cell 108. The working vehicle 101 includes the tank 107 that supplies hydrogen gas for fuel to the fuel cell 108.

The drive motor 106, the fuel cell 108, the battery 120, and the tank 107 included in the drive device 105 are described below.

As illustrated in FIGS. 11 to 13, the drive motor 106 is, for example, a permanent magnet embedded type DC or AC synchronous motor, a winding field type synchronous motor, or the like. The drive motor 106 is a single drive motor 106 provided slightly forward of a center of the vehicle body 102 in the front-rear direction. The drive motor 106 includes an output shaft extending rearward and drives the output shaft to rotate. A rear end of the output shaft is connected to the transmission case 129.

A transmission, a clutch, a differential gear, and the like that change speed stages of power transmitted to the output shaft of the drive motor are provided in the transmission case 129. The transmission case 129 decelerates or accelerates power input from the output shaft and outputs the decelerated or accelerated power to the left front wheel 118L, the right front wheel 118R, the left rear wheel 119L, and/or the right rear wheel 119R of the traveling device 104. For example, power is transmitted only to the left rear wheel 119L and the right rear wheel 119R in a case where the working vehicle 101 is rear-wheel drive. The power is transmitted to all of the left front wheel 118L, the right front wheel 118R, the left rear wheel 119L, and the right rear wheel 119R in a case where the working vehicle 101 is four-wheel drive.

Note that the drive motor 106 according to the second embodiment is provided at only one position on the upper portion of the vehicle body 102, and power generated by the single drive motor 106 is distributed into the left front wheel 118L, the right front wheel 118R, the left rear wheel 119L, and/or the right rear wheel 119R. However, the number of drive motors 106 included in the drive device 105 according to the present invention and the like may be changed as appropriate.

In the working vehicle 101 according to the second embodiment, the transmission case 129 not only transmits the decelerated or accelerated power to the traveling device 104, but also transmits a part of the power to a working device (not illustrated). Specifically, a power take-off shaft (PTO shaft) is provided in a rear portion of the working vehicle 101 (on a rear end of the transmission case 129), and power transmitted (input) to the transmission case 129 is output not only to the traveling device 104, but also to the PTO shaft. In this way, the working device (implement) can be actuated by using electric power generated by the fuel cell.

A coupler (three-point linkage 202) may be provided on the rear portion of the working vehicle 101 according to the second embodiment (the rear end of the transmission case 129). Such a three-point linkage 202 allows various implements (working devices) to be attached rearward of the working vehicle 101 and change their postures or be driven, thereby allowing the working vehicle 101 to perform various kinds of work.

The working device is an implement such as a cultivator, a rotary, a mulcher, a hammer knife mower, a ridge coating machine, a conveying machine, a seeding machine, a harrow, or a ridge making machine.

Note that the PTO shaft and the three-point linkage 202 need not necessarily be provided. The PTO shaft and the three-point linkage 202 can be omitted in a case where the working vehicle 101 is an agricultural machine such as a combine or a rice planter, a construction machine, or the like. A hydraulic pump that is driven by power output by the drive motor 106, an electric motor different from the drive motor 106, or the like may be provided separately from the drive motor 106, and the working device (implement) may be actuated by a hydraulic pressure or electric power.

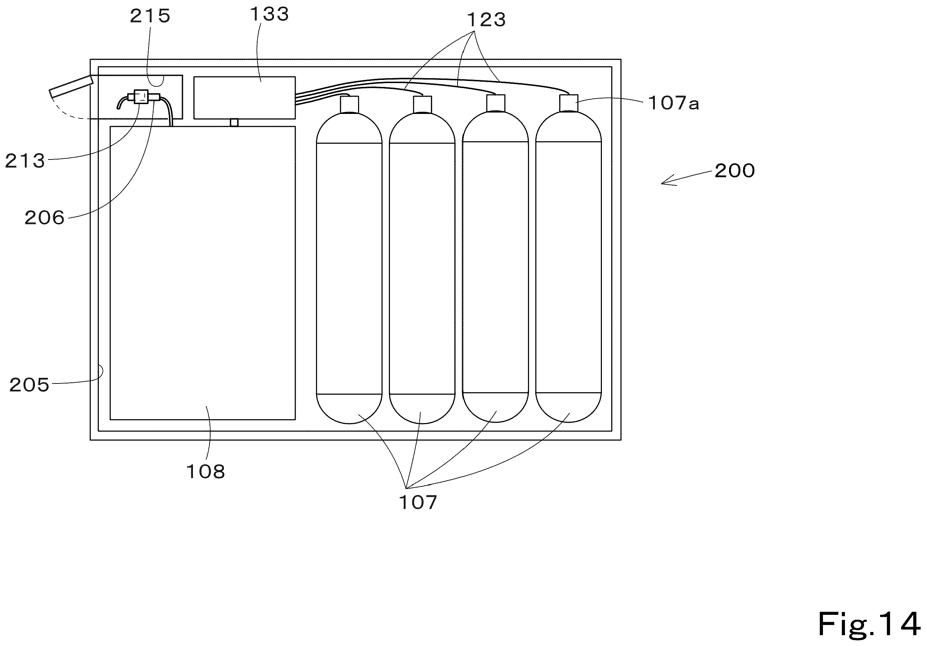

The working vehicle 101 according to the present embodiment includes the fuel cell unit 200. Specifically, as illustrated in FIG. 14, the fuel cell unit 200 is a unit in which the fuel cell unit 200 and the tank 107 are integral. The fuel cell unit 200 includes a casing 203. In the casing 203, the fuel cell 108 and the tank 107 are stored. Furthermore, in the casing 203, a valve unit 133 that, for example, mixes hydrogen gas when hydrogen gas in the tank 107 is sent to the fuel cell 108 is provided. That is, the fuel cell unit 200 autonomously generates electricity by itself by generating electric power by the fuel cell 108 by using hydrogen gas stored in the tank 107.

The fuel cell unit 200 is attachable to and detachable from the vehicle body 102. Accordingly, the fuel cell unit 200 is replaceable. The fuel cell unit 200 is provided in a place of the working vehicle 101 where the fuel cell unit 200 can be easily attached and detached. The fuel cell unit 200 is, for example, attached to an upper portion of the cabin 103 as illustrated in the second embodiment or an inside of the hood 109 as illustrated in the third embodiment.

In a place where the fuel cell unit 200 is attached, an attachment body 204 for detachable attaching the fuel cell unit 200 is provided. In the second embodiment, the attachment body 204 is provided on the upper portion of the cabin 103. In the third embodiment, the attachment body 204 is provided inside the hood 109.

Next, the casing 203, the fuel cell 108, the tank 107, the valve unit 133, and the attachment body 204 included in the fuel cell unit 200 are described.

As illustrated in FIG. 14, the casing 203 provided in the fuel cell unit 200 according to the second embodiment covers a periphery (six directions, specifically, a front side, a rear side, a left side, a right side, an upper side, and a lower side) of the fuel cell unit 200. Inside the casing 203, a unit storage 205 in which a plurality of tanks 107, the fuel cell 108, and the valve unit 133 can be stored is provided. The casing 203 is made of a steel material or the like having a thickness that can thermally and physically protect the tanks 107 from an outside. In a case where the fuel cell 108 and/or the tanks 107 are stored in the casing 203, the fuel cell 108 and/or the tanks 107 can be attached and detached together with the casing 203.

The fuel cell 108 supplies electric power to drive the drive device 105. The fuel cell 108 generates electricity by causing hydrogen, which is fuel, to perform electrode reaction with oxygen. Hydrogen supplied to the fuel cell 108 is occluded in the tanks 107. In the fuel cell 108, electrode layers are stacked. The hydrogen gas in the tanks 107 is supplied to the fuel cell 108 via the valve unit 133, and electrode reaction is performed in the fuel cell 108. In the electrode reaction in the fuel cell 108, carbon dioxide, which is always discharged, for example, in combustion reaction of an internal-combustion engine, is not discharged. Therefore, the working vehicle 101 according to the present invention, which is driven by using electric power generated by a fuel cell, is promising for realization of decarbonization.

Specifically, the fuel cell 108 includes a plurality of stacked unit cells each including two kinds of electrodes, specifically, a positive electrode and a negative electrode inside a battery casing having a box shape. The positive electrode and the negative electrode are made of a positive-electrode material and a negative-electrode material, respectively, and have a sheet shape or a film shape. Each unit cell includes a single positive electrode and a single negative electrode, and adjacent unit cells are separated by a separator. The hydrogen gas in the tanks 107 is supplied to the positive electrode, and oxygen gas (oxidation gas) compressed by a compressor or the like is supplied to the negative electrode, and battery reaction (electric power generation) is performed in each unit cell. The fuel cell 108 generates electric power of a voltage and a current that can drive the drive device 105 by gathering electric power generated by the unit cells.

The fuel cell 108 can adjust a temperature of the electrodes provided therein to a temperature at which electric power generation efficiency is high (approximately 70°C in a case of a hydrogen fuel cell). To the fuel cell 108, hydrogen gas is supplied from the tanks 107 through a gas pipe 23. A plurality of (four in the illustrated example) tanks 107 are provided beside the fuel cell 108 inside the casing 203.

As illustrated in FIG. 14, the tanks 107 store therein gas used to generate electric power in the fuel cell 108. A cylinder having a long cylindrical shape made of a hard synthetic resin or the like strengthened by carbon fibers or glass fibers is used as each of the tanks 107. In the second embodiment, the four tanks 107 (cylinders) are arranged in the front-rear direction in the tank casing 32 so that a shaft center of each tank 107 (cylinder) is directed in the vehicle body width direction.

Each tank 107 includes a neck 107a at a front end thereof. The gas pipe 23 is coupled to the neck 107a of the tank 107 with a safety valve (solenoid valve) (not illustrated) interposed therebetween.

Each of the plurality of tanks 107 is provided with the gas pipe 23, and the gas pipe 23 guides the hydrogen gas in the tank 107 to the valve unit 133. As the gas pipe 23, a hose made of a composite material combining materials such as a synthetic resin that can prevent transmission of hydrogen gas and a metal wire having flexibility, or the like is used.

The valve unit 133 includes a solenoid valve or the like that can adjust a pressure and a flow rate of the hydrogen gas, and sends the hydrogen gas to the fuel cell 108 after adjusting the hydrogen gas to a pressure and a flow rate suitable for electric power generation in the fuel cell 108.

The attachment body 204 according to the present embodiment is a member for attaching the fuel cell unit 200 to a desired position in the working vehicle 101. In the second embodiment, the attachment body 204 is provided on the cabin 103.

Specifically, the attachment body 204 according to the second embodiment includes a plurality of brackets 207 on an upper portion of the cabin 103. The brackets 207 are metal fittings for fixing the fuel cell unit 200. In the second embodiment, metal stays bent in an L shape are used as the brackets 207.

One portion of each of the brackets 207 bent in an L shape has a first insertion hole 209 through which a first fastener 208 is inserted. The other portion of each of the brackets 207 bent in an L shape has a second insertion hole 211 through which a second fastener 210 is inserted. The first fastener 208 is inserted through the first insertion hole 209 and fixes the bracket 207 to a side surface of the casing 203. The second fastener 210 is inserted through the second insertion hole 211 and fixes the bracket 207 to the upper portion (upper surface) of the cabin 103. Use of the brackets 207 (the attachment body 204) makes it possible to firmly attach the fuel cell unit 200 to the upper portion (upper surface) of the cabin 103 with certainty. When at least one of the first fastener 208 and the second fastener 210 is unfastened, the fuel cell unit 200 can be detached from the upper portion (upper surface) of the cabin 103. Therefore, use of the brackets 207 (the attachment body 204) allows the fuel cell unit 200 to be attached to and detached from the upper portion (upper surface) of the cabin 103.

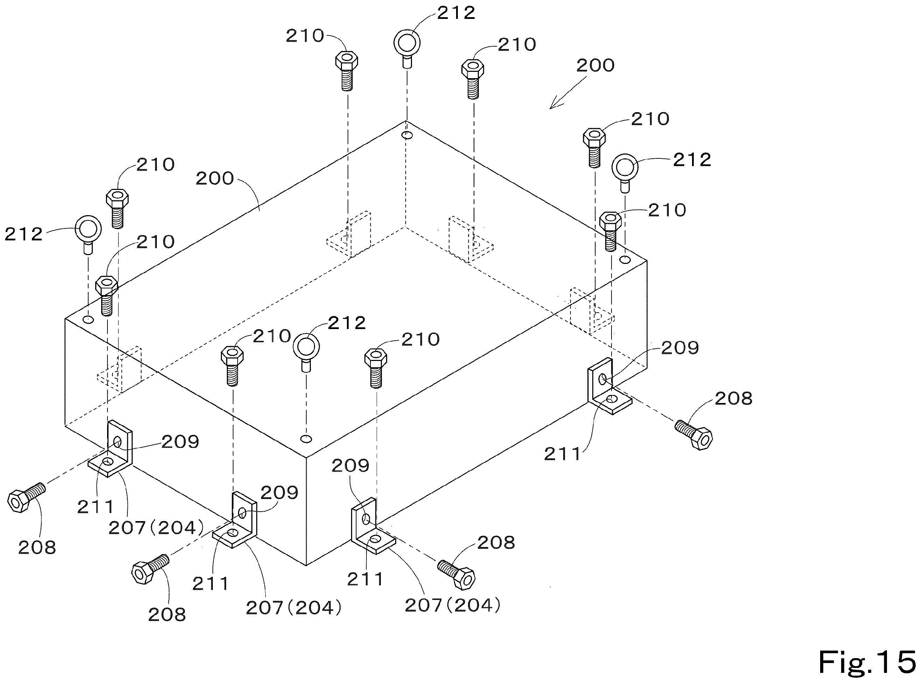

As illustrated in FIG. 15, the fuel cell unit 200 includes a lifting aid 212 for supporting the fuel cell unit 200 in a suspended manner. In the second embodiment, eyebolts attached to four corners of an upper surface of the casing 203 are used as the lifting aid 212. Use of the lifting aid 212 makes it possible to freely raise and lower the fuel cell unit 200 by using a crane or the like. As a result, it is easy to remove the fuel cell unit 200 from which the brackets 207 (the attachment body 204) have been detached or transport a new fuel cell unit 200 onto the upper portion of the cabin 103.

The fuel cell unit 200 includes an output connector 206. The output connector 206 is a wiring member that outputs electric power generated by the fuel cell 108 to an outside. An input connector 213 is attachable to and detachable from the output connector 206. By connecting the input connector 213 to the output connector 206, electric conduction is established. A wire extending from the input connector 213 is fixed to the vehicle body 102 side and is connected to an electric circuit (the power control unit 201) that supplies electric power to the drive device 105, and inputs electric power generated by the fuel cell 108 to the drive device 105. A "power harness" or a "power extraction harness" can be used as the output connector 206 and the input connector 213.

Note that the output connector 206 and the input connector 213 are preferably provided in a water-proof place. In the second embodiment, a wire storage box 215 is provided on a side surface of the casing 203 of the fuel cell unit 200. By storing the output connector 206 and the input connector 213 in the wire storage box 215, waterproofness of the output connector 206 and the input connector 213 can be increased.

In the second embodiment, the power control unit 201 is used as the electric circuit that supplies electric power to the drive device 105. The power control unit 201 according to the second embodiment is provided inside the hood 109. The power control unit 201 adjusts the electric power generated by the fuel cell 108 to a voltage suitable for operation of the drive device 105, the battery 120, or another electric component. In the power control unit 201, a step-up circuit and a step-down circuit are provided by combining an inverter and a power transistor.

For example, the step-up circuit provided in the power control unit 201 secures a voltage for activating the drive motor 106 by stepping up the electric power generated by the fuel cell 108. The step-down circuit steps down the stepped-up electric power in order that electric components that operate at a voltage lower than the drive motor 106 (light electric components) operate. The step-down circuit includes two DC-DC converters. Examples of the electric components that operate at a low voltage include a first radiator 122, a second radiator 124, and the battery 120.

The battery 120 accumulates electricity generated by the fuel cell 108 and supplied via the power control unit 201. In the working vehicle 101 according to the second embodiment, the battery 120 is provided below the operator's seat 110. In a case where the battery 120 is provided below the operator's seat 110, the battery 120, which is heavy in weight, is located in a lower portion of the vehicle. This can lower a center of gravity of the working vehicle 101 and stabilize traveling performance.

Next, a method for attaching and detaching the fuel cell unit 200 (fuel cell unit 200 attachment detachment method) according to the second embodiment is described.

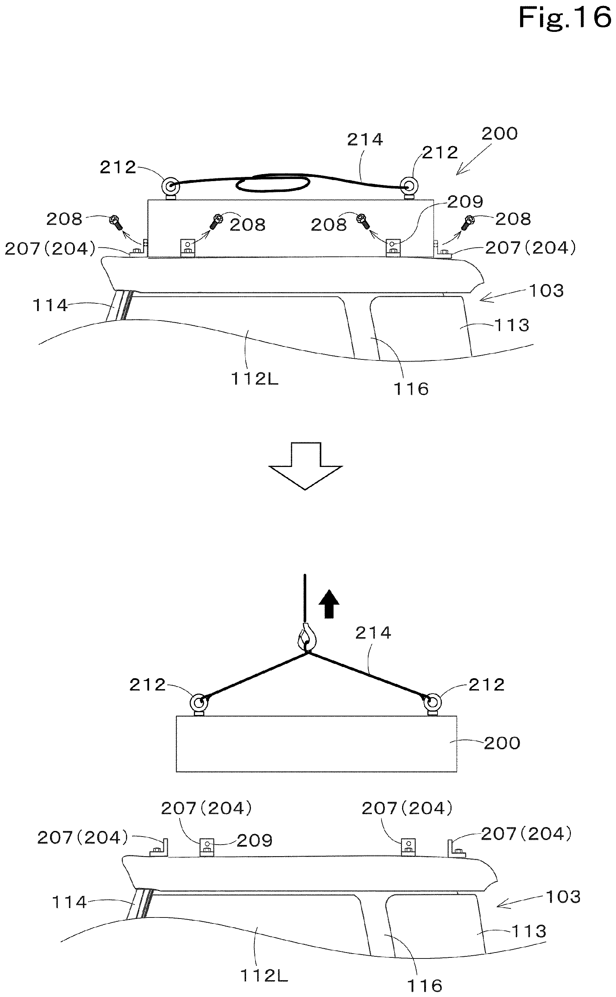

As illustrated in FIG. 16, in a case where the fuel cell unit 200 is detached from the upper portion of the cabin 103, a sling belt 214 is first attached to the eyebolts attached to the four corners of the upper surface of the casing 203. Next, the wire storage box 215 provided on the side surface of the casing 203 of the fuel cell unit 200 is opened, and the input connector 213 is detached from the output connector 206.

As illustrated in the upper portion of FIG. 16, the first fastener 208 attached to the side surface of the casing 203 is detached. Detaching the first fastener 208 from the first insertion hole 209 allows the bracket 207 fixed by the first fastener 208 to be detached from the casing 203.

As illustrated in the lower portion of FIG. 16, the sling belt 214 fixed to the fuel cell unit 200 with the use of the eyebolts is raised by a crane. In this way, the fuel cell unit 200 can be detached from the upper portion of the cabin 103.

In a case where the fuel cell unit 200 is attached to the upper portion of the cabin 103, a procedure reverse to that described above is performed. In this way, the fuel cell unit 200 can be attached to the upper portion of the cabin 103.

### <Third Embodiment>

Next, a working vehicle 101 according to the third embodiment is described.

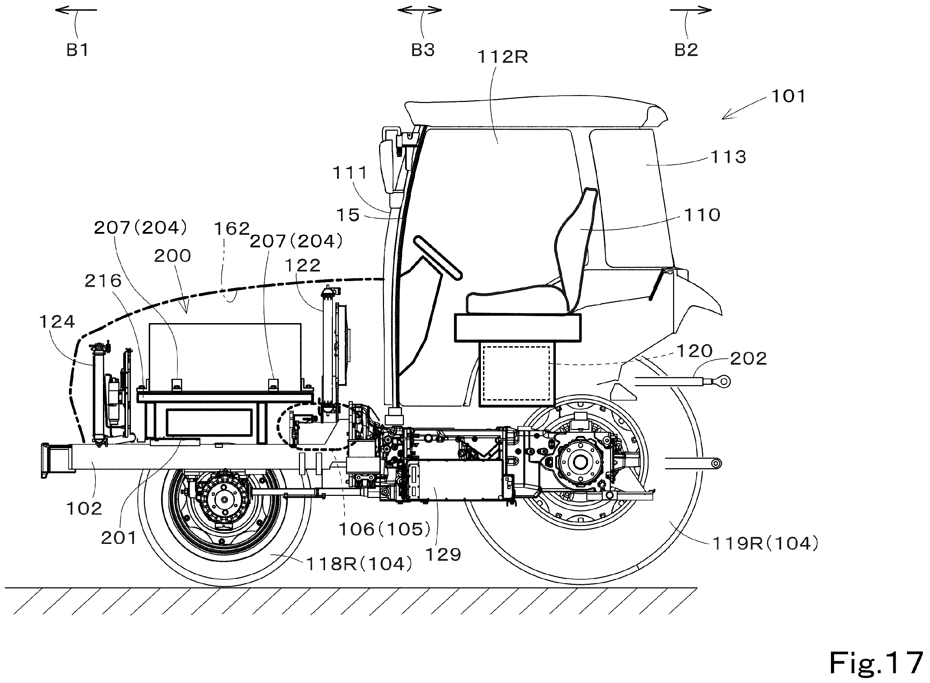

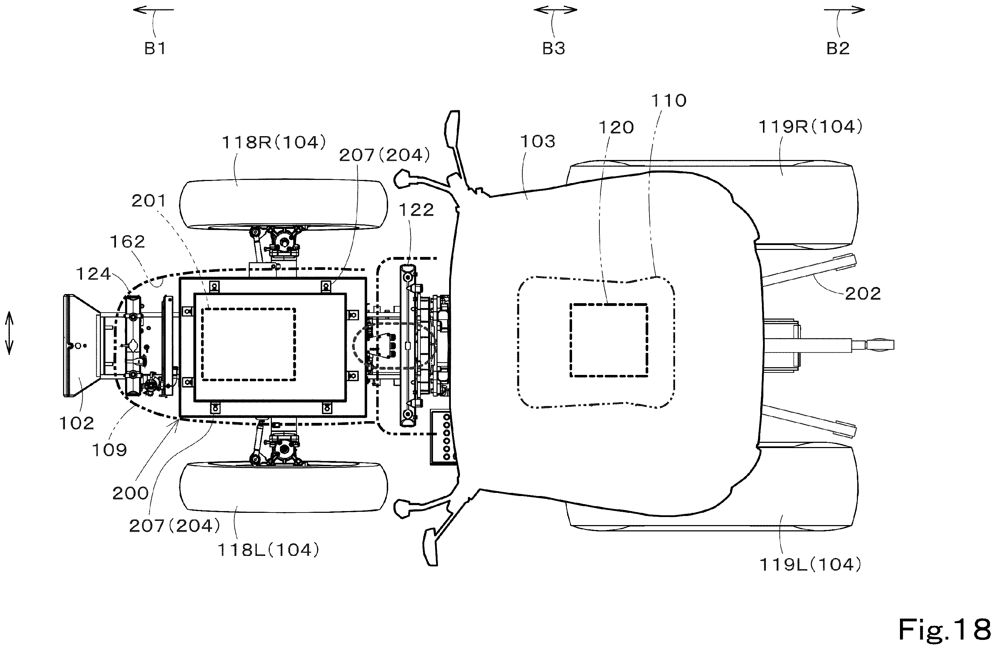

As illustrated in FIGS. 17 and 18, the working vehicle 101 according to the third embodiment includes a fuel cell unit 200 similar to that of the second embodiment. A configuration of the fuel cell unit 200 provided in the working vehicle 101 according to the third embodiment is identical to that of the second embodiment. The fuel cell unit 200 according to the third embodiment is different from that of the second embodiment in an attachment position of the fuel cell unit 200 and a structure of an attachment portion.

Specifically, the fuel cell unit 200 according to the second embodiment is attached to the upper portion of the cabin 103, whereas the fuel cell unit 200 according to the third embodiment is attached inside a hood 109.

In the hood 109 provided in the working vehicle 101 according to the third embodiment, a power control unit 201 is provided, as in the second embodiment. The power control unit 201 is provided forward of a drive motor 106. A support mount 216 that supports the fuel cell unit 200 is provided above the power control unit 201.

The support mount 216 is provided to support the fuel cell unit 200 inside the hood 109. The support mount 216 is fixed to a vehicle body 2 and can support a weight of the fuel cell unit 200. An attachment body 204 is provided on an upper surface of the support mount 216. The attachment body 204 includes a plurality of brackets 207. The brackets 207 are metal fittings for fixing the fuel cell unit 200. As the brackets 207, metal stays bent in an L shape similar to those in the first embodiment are used. Each of the brackets 207 has a first insertion hole 209 through which a first fastener 208 is inserted and a second insertion hole 211 through which a second fastener 210 is inserted. By inserting the first fastener 208 and the second fastener 210 through the insertion holes, the fuel cell unit 200 is fixed to the upper portion (upper surface) of the support mount 216 with the use of the brackets 207.

Next, a method for attaching and detaching the fuel cell unit 200 according to the third embodiment (fuel cell unit 200 attachment detachment method) is described.

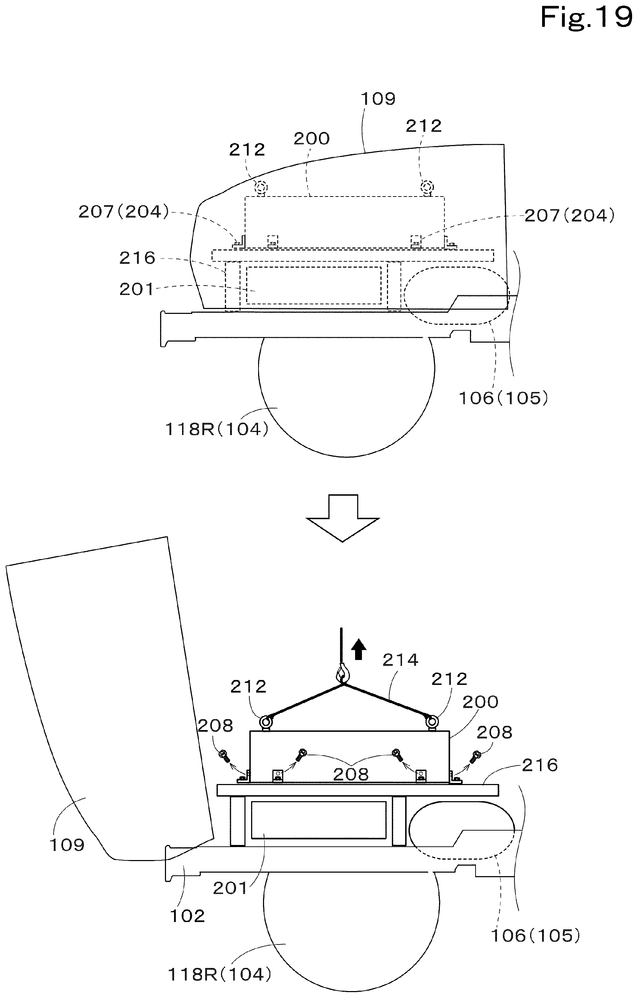

As illustrated in FIG. 19, in a case where the fuel cell unit 200 is detached from the upper portion of the support mount 216 (an inside of the hood 109), the hood 109 is opened first. In the example illustrated in FIG. 19, a rear end of the hood 109 can be swung about a front end in a flip-up direction. Note that a method for opening the hood 109 varies from one vehicle to another, and therefore the hood 109 may be opened by a different method.

After the hood 109 is opened, a sling belt 214 is attached to eyebolts attached to four corners of an upper surface of a casing 203. Next, a wire storage box 215 provided on a side surface of the casing 203 of the fuel cell unit 200 is opened, and an input connector 213 is detached from an output connector 206.

As illustrated in the lower portion of FIG. 16, the first fastener 208 attached to the side surface of the casing 203 is detached. Detaching the first fastener 208 from the first insertion hole 209 allows the bracket 207 fixed by the first fastener 208 to be detached from the casing 203.

As illustrated in the lower portion of FIG. 19, the sling belt 214 fixed to the fuel cell unit 200 with the use of the eyebolts are raised by a crane. In this way, the fuel cell unit 200 can be detached from the upper portion of the cabin 103.

In a case where the fuel cell unit 200 is attached to the upper portion of the cabin 103, a procedure reverse to that described above is performed. In this way, the fuel cell unit 200 can be attached to the upper portion of the cabin 103.

Example embodiments of the present invention provide working vehicles 1 described in the following items.

(Item 1) A working vehicle 1 including a vehicle body 2 to which a working device 49 is connectable, a cabin 3 to house an operator's seat 10 provided on the vehicle body 2, a traveling device 4 to support the vehicle body 2 and allow the vehicle body 2 to travel, a drive device 5 to drive the traveling device 4, and a first heat exchanger 80, wherein the drive device 5 includes a fuel cell 8 to generate electric power to drive the drive device 5, and the first heat exchanger 80 is operable to supply air cooled by heat exchange with a refrigerant into the cabin 3 and supply heat of the refrigerant heated by the heat exchange to the fuel cell 8.

With the working vehicle 1 according to item 1, the inside of the cabin 3 can be cooled by the first heat exchanger 80, and the temperature of the fuel cell 8 can be adjusted to an appropriate temperature.

(Item 2) The working vehicle 1 according to item 1, wherein a hood 9 is provided at a front portion of the vehicle body 2, and the fuel cell 8 is housed in the hood 9.

With the working vehicle 1 according to item 2, the first heat exchanger 80 can perform heat exchange between the inside of the hood 9 and the inside of the cabin 3, and therefore the temperature of the fuel cell 8 provided in the hood 9 can be adjusted to an appropriate temperature.

(Item 3) The working vehicle 1 according to item 1, wherein the first heat exchanger 80 includes a first condenser 83 to release heat of the refrigerant and a heat guider (e.g., first condenser fan 88) to guide the heat released from the first condenser 83 to the fuel cell 8.

With the working vehicle 1 according to item 3, heat released from the first condenser 83 can be guided to the fuel cell 8 with certainty, and the temperature of the fuel cell 8 can be adjusted to an appropriate temperature.

(Item 4) The working vehicle 1 according to item 2, wherein the first heat exchanger 80 includes a first condenser 83 to release heat in the hood 9, a first evaporator 85 to perform heat absorption in the cabin 3, a first pipe 86 to allow the refrigerant to circulate between the first condenser 83 and the first evaporator 85, and a first compressor 87 to compress the refrigerant that has absorbed heat in the first evaporator 85.

With the working vehicle 1 according to item 4, the first heat exchanger 80 including the first condenser 83, the first evaporator 85, and the first compressor 87 that are provided in the first pipe 86 is used, and therefore heat absorbed in the cabin 3 can be used to heat the fuel cell 8. As a result, the temperature of the fuel cell 8 can be efficiently adjusted.

(Item 5) The working vehicle 1 according to item 4, wherein the first heat exchanger 80 includes a first condenser fan 88 to blow heat released from the first condenser 87 to the fuel cell 8 as hot air and an air blowing fan to send air cooled by the heat absorption in the first evaporator 85 into the cabin as cool air.

With the working vehicle 1 according to item 5, the first condenser fan 88 is provided, and therefore heat released by the first condenser 83 can be sent to the fuel cell 8 as hot air, and the fuel cell 8 can be efficiently heated. Furthermore, by blowing cool air cooled by the first evaporator 85 using the air blowing fan, the inside of the cabin 3 can be efficiently cooled.

(Item 6) The working vehicle 1 according to item 1, further including a plurality of tanks 7 to store gas to drive the drive device 5, wherein the traveling device 4 includes front wheels 18 provided at left and right sides of a front portion of the vehicle body 2 and rear wheels 19 provided at left and right sides of a rear portion of the vehicle body 2, and the plurality of tanks 7 are provided between the front wheels 18 and the rear wheels 19.

With the working vehicle 1 according to item 6, the tanks 7, which are heavy in weight, are provided between the front wheels 18 and the rear wheels 19, and therefore the weight of the tanks 7 is almost equally applied to both of the front wheels 18 and the rear wheels 19. This can stabilize travelling performance.

(Item 7) The working vehicle 1 according to item 6, wherein the drive device 5 includes a battery 20 to store electric power generated by the fuel cell 8 and a drive motor 6 to be driven by electric power generated by the fuel cell 8, and the drive motor 6 is provided at a center of the vehicle body 2 in a left-right direction such that the drive motor is located between the front wheels 19 and the rear wheels 19.

With the working vehicle 1 according to item 7, the drive motor 6, which is the second heaviest in weight after the tank(s) 7, is provided between the front wheels 18 and the rear wheels 19, and therefore the weight of the drive motor 6 is almost equally applied to both of the front wheels 18 and the rear wheels 19, as with the case of the tank(s) 7. This can further stabilize travelling performance.

(Item 8) The working vehicle 1 according to item 7, wherein the battery 20 is provided below the operator's seat 10 in the cabin 3.

With the working vehicle 1 according to item 8, the battery 20, which is heavy in weight as with the tank(s) 7 and the drive motor 6, is provided below the operator's seat 10. Therefore, the battery 20, which is heavy in weight, is located in a lower portion of the vehicle. This can lower the center of gravity of the working vehicle 1 and stabilize travelling performance.

(Item 9) The working vehicle 1 according to item 1, wherein a second heat exchanger 81 to cool the fuel cell 8 is provided rearward of the fuel cell 8 inside the hood 9.

With the working vehicle 1 according to item 9, the second heat exchanger 81 is provided in addition to the first heat exchanger 80, and therefore the fuel cell 8 is heated by the first heat exchanger 80, and the fuel cell 8 can be cooled by the second heat exchanger 81. As a result, the temperature of the fuel cell 8 can be more efficiently adjusted.

(Item 10) The working vehicle 1 according to item 9, wherein the second heat exchanger 81 includes a stack cooler 89 to cool the fuel cell 8, a second condenser 84 to release heat at a location in the hood 9 forward and/or rearward of the fuel cell 8, a second condenser fan 90 to discharge the heat released by the second condenser 84 to an outside of the hood 9, a second pipe 91 to allow a refrigerant to circulate between the second condenser 84 and the stack cooler 89, and a second compressor 92 to compress the refrigerant that has absorbed heat in the stack cooler 89.

With the working vehicle 1 according to item 10, the second heat exchanger 81 including the stack cooler, the second condenser 84, and the second compressor 92 that are provided in the second pipe 91 is provided, and therefore the fuel cell 8 provided in the cabin 3 can be heated and cooled. As a result, the temperature of the fuel cell 8 can be more efficiently adjusted.

Example embodiments of the present invention provide working vehicles 101 described in the following items.

(Item 11) A working vehicle 101 including a vehicle body 102, a traveling device 104 to support the vehicle body 102 and allow the vehicle body 102 to travel, a drive device 105 to drive the traveling device 104, and a fuel cell unit 200 including a fuel cell 108 to supply electric power to drive the drive device 105, and a tank 107 to store gas used to generate electric power in the fuel cell 108, wherein the fuel cell unit 200 is attachable to and detachable from the vehicle body 102.

With the working vehicle 101 according to item 11, the fuel cell 108 and the tank 107 can be concurrently detached from the vehicle body 102, and maintenance of the fuel cell 108 and the tank 107 can be easily done. For example, component replacement and the like can be easily performed by replacing a component concerning the tank 107 or replacing a component of the fuel cell 108 in a state where the fuel cell unit 200 has been detached and then attaching the fuel cell 108 and the tank 107 whose components have been replaced to the vehicle body 102.

(Item 12) The working vehicle 101 according to item 11, wherein the vehicle body 102 includes a cabin 103 to house an operator's seat 110 provided on the vehicle body 2 and a hood 109 provided forward of the cabin 103, and the working vehicle 101 further includes an attachment body 204 to support the fuel cell unit 200 in an attachable and detachable manner inside the hood 109 and/or on the cabin 103.

With the working vehicle 101 according to item 12, the fuel cell unit 200 is attachable and detachable with the use of the attachment body 204, and therefore maintenance of both of the tank 107 and the fuel cell 108 can be easily done by detaching the fuel cell unit 200 including the tank 107 and the fuel cell 108. For example, the fuel cell unit 200 can be easily attached to the vehicle body 102 by replacing a component concerning the tank 107 or replacing a component of the fuel cell 108 in a state where the fuel cell unit 200 has been detached and then attaching the fuel cell unit 200 whose component has been replaced to the attachment body 204.

(Item 13) The working vehicle 101 according to item 11, wherein the fuel cell unit 200 includes an output connector 206 to output electric power generated by the fuel cell 108 to an outside, the attachment body 204 includes a bracket 207 to fix the fuel cell unit 200 and an input connector 213 connected to an electric circuit to supply electric power to the drive device 105 and coupled to the output connector 206 such that electric power generated by the fuel cell 108 is input to the input connector 213, and the output connector 206 and the input connector 213 are attachable to and detachable from each other.

With the working vehicle 101 according to item 13, the output connector 206 and the input connector 213 are attachable to and detachable from each other, and therefore the fuel cell unit 200 can be easily detached from the vehicle body 102 after the input connector 213 is detached from the output connector 206, and the fuel cell unit 200 can be attached easily by connecting the input connector 213 to the output connector 206 after the fuel cell unit 200 is attached to the vehicle body 102.

(Item 14) The working vehicle 101 according to item 12, wherein the attachment body 204 is provided at an upper portion of the cabin 103.

With the working vehicle 101 according to item 14, the attachment body 204 is provided at the upper portion of the cabin 103, and therefore the fuel cell unit 200 can be attached to a position away from the operator's seat 110, and an operator can be protected from heat and the like.

(Item 15) The working vehicle 101 according to item 12, wherein the attachment body 204 is provided inside the hood 109.

With the working vehicle 101 according to item 15, the attachment body 204 is provided inside the hood 109, and therefore the fuel cell unit 200 can be attached to a position away from the operator's seat 110, and an operator can be protected from heat and the like.

(Item 16) The working vehicle 101 according to item 11 or 12, wherein the fuel cell unit 200 includes a casing 203 to house the fuel cell 108 and/or the tank 107, and the fuel cell 108 and/or the tank 107 are attached and detached together with the casing 203.

With the working vehicle 101 according to item 16, the fuel cell 108 and the tank 107 are stored in the casing 203, and therefore these members can be attached and detached at once together.

(Item 17) The working vehicle 101 according to item 11 or 12, wherein the fuel cell unit 200 includes a lifting aid 212 to support the fuel cell unit 200 in a suspended manner.

With the working vehicle 101 according to item 17, the fuel cell unit 200 can be easily removed from and transported onto the working vehicle 101 using the lifting aid 212.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle

- 2: vehicle body
- 3: cabin
- 4: traveling device
- 5: drive device
- 6: drive motor
- 7: tank
- 8: fuel cell
- 9: hood
- 10: operator's seat
- 18: front wheel
- 19: rear wheel
- 20: battery
- 49: working device
- 80: first heat exchanger
- 81: second heat exchanger
- 83: first condenser
- 84: second condenser
- 85: first evaporator
- 86: first pipe
- 87: first compressor
- 88: first condenser fan
- 89: stack cooler
- 90: second condenser fan
- 91: second pipe
- 92: second compressor
- 101: working vehicle
- 102: vehicle body
- 103: cabin
- 104: traveling device
- 105: drive device
- 107: tank
- 108: fuel cell
- 109: hood
- 200: fuel cell unit
- 203: casing
- 204: attachment body
- 206: output connector
- 207: bracket
- 212: lifting aid
- 213: input connector

## Claims

1. A working vehicle comprising:
a vehicle body to which a working device is connectable;
a cabin to house an operator's seat provided on the vehicle body;
a traveling device to support the vehicle body and allow the vehicle body to travel;
a drive device to drive the traveling device; and
a first heat exchanger; wherein
the drive device includes a fuel cell to generate electric power to drive the drive device and
the first heat exchanger is operable to supply air cooled by heat exchange with a refrigerant into the cabin and supply heat of the refrigerant heated by the heat exchange to the fuel cell.

2. The working vehicle according to claim 1, wherein
a hood is provided at a front portion of the vehicle body; and
the fuel cell is housed in the hood.

3. The working vehicle according to claim 1, wherein
the first heat exchanger includes:
a first condenser to release heat of the refrigerant; and
a heat guider to guide the heat released from the first condenser to the fuel cell.

4. The working vehicle according to claim 2, wherein
the first heat exchanger includes:
a first condenser to release heat in the hood;
a first evaporator to perform heat absorption in the cabin;
a first pipe to allow the refrigerant to circulate between the first condenser and the first evaporator; and
a first compressor to compress the refrigerant that has absorbed heat in the first evaporator.

5. The working vehicle according to claim 4, wherein
the first heat exchanger includes:
a first condenser fan to blow heat released from the first condenser to the fuel cell as hot air; and
an air blowing fan to send air cooled by the heat absorption in the first evaporator into the cabin as cool air.

6. The working vehicle according to claim 1, further comprising a plurality of tanks to store gas to drive the drive device; wherein
the traveling device includes front wheels provided at left and right sides of a front portion of the vehicle body and rear wheels provided at left and right sides of a rear portion of the vehicle body; and
the plurality of tanks are provided between the front wheels and the rear wheels.

7. The working vehicle according to claim 6, wherein
the drive device includes a battery to store electric power generated by the fuel cell and a drive motor to be driven by electric power generated by the fuel cell; and
the drive motor is provided at a center of the vehicle body in a left-right direction such that the drive motor is located between the front wheels and the rear wheels.

8. The working vehicle according to claim 7, wherein
the battery is provided below the operator's seat in the cabin.

9. The working vehicle according to claim 1, wherein a second heat exchanger to cool the fuel cell is provided rearward of the fuel cell inside a hood.

10. The working vehicle according to claim 9, wherein
the second heat exchanger includes:
a stack cooler to cool the fuel cell;
a second condenser to release heat at a location in the hood forward and/or rearward of the fuel cell;
a second condenser fan to discharge the heat released by the second condenser to an outside of the hood;
a second pipe to allow a refrigerant to circulate between the second condenser and the stack cooler; and
a second compressor to compress the refrigerant that has absorbed heat in the stack cooler.

11. A working vehicle comprising:
a vehicle body;
a traveling device to support the vehicle body and allow the vehicle body to travel;
a drive device to drive the traveling device; and
a fuel cell unit including a fuel cell to supply electric power to drive the drive device, and a tank to store gas used to generate electric power in the fuel cell; wherein
the fuel cell unit is attachable to and detachable from the vehicle body.

12. The working vehicle according to claim 11, wherein
the vehicle body includes a cabin to house an operator's seat provided on the vehicle body and a hood provided forward of the cabin; and
the working vehicle further comprises an attachment body to support the fuel cell unit in an attachable and detachable manner inside the hood and/or on the cabin.

13. The working vehicle according to claim 11, wherein
the fuel cell unit includes an output connector to output electric power generated by the fuel cell to an outside;
an attachment body includes a bracket to fix the fuel cell unit and an input connector connected to an electric circuit to supply electric power to the drive device and coupled to the output connector such that electric power generated by the fuel cell is input to the input connector; and
the output connector and the input connector are attachable to and detachable from each other.

14. The working vehicle according to claim 12, wherein
the attachment body is provided at an upper portion of the cabin.

15. The working vehicle according to claim 12, wherein
the attachment body is provided inside the hood.

16. The working vehicle according to claim 11 or 12, wherein
the fuel cell unit includes a casing to house the fuel cell and/or the tank, and the fuel cell and/or the tank are attached and detached together with the casing.

17. The working vehicle according to claim 11 or 12, wherein
the fuel cell unit includes a lifting aid to support the fuel cell unit in a suspended manner.
